# EUROPÄISCHE PATENTSCHRIFT

(11) **EP 1 996 111 B1**
(45) Veröffentlichungstag und Bekanntmachung des Hinweises auf die Patenterteilung: **11.07.2018**
(21) Anmeldenummer: 07723249.4
(22) Anmeldetag: 14.03.2007
(51) Int. Cl.: A61C 17/34, B26B 21/38, A45D 40/26

(54) **ELEKTRISCH BETRIEBENES, KONTINUIERLICH EINSTELLBARES KÖRPERPFLEGEGERÄT**
ELECTRICALLY DRIVEN, CONTINUOUSLY ADJUSTABLE BODY CARE DEVICE
INSTRUMENT ÉLECTRIQUE POUR LES SOINS CORPORELS AJUSTABLE EN CONTINU

(30) Priorität: 17.03.2006 EP 06005512
(43) Veröffentlichungstag der Anmeldung: 03.12.2008
(73) Patentinhaber: Trisa Holding AG, 6234 Triengen (CH)
(72) Erfinder: BÄRTSCHI, Armin, 4652 Winznau (CH); FISCHER, Franz, 6234 Triengen (CH); HILFIKER, Christian, 6234 Triengen (CH)
(74) Vertreter: Schaad, Balass, Menzl & Partner AG
(86) Internationale Anmeldenummer: PCT/EP2007/002241
(87) Internationale Veröffentlichungsnummer: WO 2007/107274

(56) Entgegenhaltungen:
- EP-A- 1 584 263
- WO-A-2005/077616
- DE-U1- 8 422 081
- US-A1- 2006 032 512

## Beschreibung

Die vorliegende Erfindung betrifft ein elektrisch betriebenes Körperpflegegerät mit den Merkmalen des Oberbegriffs des Anspruchs 1.

Derartige Körperpflegegeräte sind allgemein bekannt. In WO 2005/046508 ist ein als Zahnbürste ausgebildetes elektrisch betriebenes Körperpflegegerät offenbart. Die Zahnbürste weist einen elektrischen Energiespeicher, entweder eine Batterie oder einen Akku, auf, der in einem Innenraum im Griffkörper der Zahnbürste angeordnet ist. An den Griffkörper schliesst ein Halsbereich an, welcher seinerseits in einen Kopfbereich übergeht. Im Kopfbereich ist ein Pflegeelement mit Borstenbesatz angeordnet. Der Borstenbesatz wird durch einen elektrischen Motor mit einem an der Motorenachse exzentrisch gelagerten Gewicht in Schwingung beziehungsweise Vibration versetzt. Der Motor ist im Halsbereich der Zahnbürste angeordnet. Über einen am Griffkörper angeordneten Ein-/Ausschalter kann der Motor mit dem Energiespeicher verbunden bzw. von diesem getrennt werden. Weiter offenbart WO 2005/046508 einen elektrischen Umschalter, mittels welchem ein zusätzlicher Widerstand in den Stromkreis geschaltet werden kann. Durch Einfügen des zusätzlichen Widerstandes fällt die Spannung über dem Motor und somit seine Tourenzahl und folglich die Vibrationsstärke.

Aus EP-A-1 563 967 ist ein als Rasierer ausgebildetes elektrisch betriebenes Körperpflegegerät bekannt. Dieses ist weitgehend analog zu der in WO 2005/046508 offenbarten Zahnbürste ausgebildet, weist jedoch im Kopfbereich ein durch einen auswechselbaren Rasierkopf mit Rasierklinge ausgebildetes Pflegeelement auf.

In der DE 84 22 081 U1 wird eine Zahnbürste mit einem stabförmigen Gehäuse beschrieben, in welchem ein elektrisches Antriebsaggregat untergebracht ist. Die Zahnbürste umfasst weiterhin einen auswechselbaren, mechanisch angetriebenen Bürstenkopf, wobei die Bürste eine rotierende Bürste ist und wobei die Bürste mit einer Schutzkappe teilweise abgedeckt ist. Ausserdem ist ein Umschalter zum Umschalten der Drehrichtung der Bürste vorgesehen.

Nachteilig an den bekannten, obengenannten Körperpflegegeräten erweist sich, dass die dem elektrischen Motor zugeführte elektrische Leistung nicht, beziehungsweise nur sehr beschränkt, durch den Benutzer beeinflusst werden kann, wodurch eine Anpassung des elektrisch betriebenen Körperpflegegerätes an die jeweiligen individuellen Bedürfnisse des Benutzers oder an eine mit Toleranzen behaftete technische Ausgestaltung nicht, beziehungsweise nur sehr eingeschränkt, erfolgen kann. Diese beschränkte Einstellbarkeit des Körperpflegegerätes kann letztendlich zu einer nicht effizienten Anwendung führen. So gibt es beispielsweise bei Vibrationszahnbürsten keine Frequenz, die für alle Benutzer optimal ist. Benutzer mit sensitivem Zahnfleisch werden eher eine niedrig frequente Massage beanspruchen, wo hingegen andere Benutzer eine entsprechende Massage in mittlerer Frequenz möchten. Um eine maximale Putzleistung, beziehungsweise einen Whitening-Effekt zu erzielen, werden wiederum andere Benutzer eine hochfrequente Reinigung benötigen. Dasselbe gilt für rotierende elektrische Zahnbürsten, nur wird in diesem Fall die Drehfrequenz des rotierenden Bürstenteils an das Bedürfnis des Benutzers angepasst. Eine rotierende elektrische Zahnbürste ist in DE-U-295 20 230.0 vorgestellt.

Ziel der vorliegenden Erfindung ist es, ein elektrisch betriebenes Körperpflegegerät bereitzustellen, welches die Effizienz der Anwendung verbessert und somit an die individuellen Bedürfnisse des Benutzers angepasst werden kann.

Diese Aufgabe wird mit einem elektrisch betriebenen Körperpflegegerät mit den Merkmalen des Anspruchs 1 gelöst. Vorteilhafte Weiterbildungen der Erfindung ergeben sich aus den abhängigen Ansprüchen, der Beschreibung und der Zeichnung.

Erfindungsgemäss weist das elektrisch betriebene Körperpflegegerät eine Steuereinrichtung auf, welche ein mittels eines Einstellelements von aussen mechanisch und manuell einstellbares elektrisches Steuerelement zur kontinuierlichen Veränderung des Energieflusses zwischen dem Energiespeicher und dem Verbraucher aufweist und die bestimmungsgemässe Funktion des Verbrauchers gewährleistet und wobei das Steuerelement und das Einstellelement drehbar ausgebildet sind, in einer abnehmbaren Endkappe angeordnet sind, mittels welcher der Innenraum verschlossen ist, und die Endkappe zwei voneinander getrennte, elektrische Kontaktelemente, welche elektrisch mit dem Steuerelement verbunden sind, aufweist und bei verschlossenem Innenraum das eine der Kontaktelemente mit einem Gegenkontakt am Griffkörper und das andere der Kontaktelemente mit einem Kontakt des Energiespeichers elektrisch verbunden ist. Dadurch ist es möglich, diejenige Energiemenge zuzuführen, welche für eine optimale Anwendung notwendig ist. Diese Energiemenge kann unter anderem von den jeweiligen, individuellen Bauelementen, wie beispielsweise vom elektrischen Verbraucher und vom Energiespeicher abhängen, welche jeweils interne Toleranzen aufgrund der Fertigung besitzen. Weiter ist durch das erfindungsgemässe Körperpflegegerät sichergestellt, dass der Verbraucher nur bei Erfüllung seiner bestimmungsgemässen Funktion Energie verbraucht. Des weiteren besitzt auch das Körperpflegegerät eine Eigenfrequenz, welche zusätzlich durch das Halten des Produkts in der Hand des Benutzers beeinflusst wird (Haltepunkt, Haltedruck). Generell erlaubt die Steuereinrichtung das manuelle Justieren des Verbrauchers.

Weiter kann die Energiemenge bei einer bevorzugten Ausführungsform von einem vom Verbraucher angetriebenen Pflegeelement abhängen, welches in einen genau definierten Erregungszustand gebracht wird. Obwohl jedes Bauelement lediglich innerhalb gewisser Toleranzgrenzen produziert werden kann, ermöglicht die kontinuierliche Veränderbarkeit des Energieflusses vom Energiespeicher zum Verbraucher, die Toleranzen auszugleichen und diesem die für eine optimale Anwendung benötigte Energiemenge zuzuführen, insbesondere das Körperpflegegerät auch in Resonanz, das heisst bei maximaler Schwingung, zu betreiben.

Gemäss einer weiteren, bevorzugten Ausführungsform ist das Pflegeelement in Vibration versetzbar und die Stärke der Vibration ist mittels des Steuerelements manuell einstellbar. Dadurch kann die Vibrationsstärke kontinuierlich, stufenlos in einem durch das Steuerelement vorgegebenen Bereich durch den jeweiligen Benutzer des Körperpflegegerätes eingestellt werden. Insbesondere kann ein Benutzer die Vibrationsstärke derart einstellen, dass das Körperpflegegerät mit zugehörigem Pflegeelement, insbesondere einem mit Borsten besetzten Pflegeelement, in Resonanz schwingt oder dass die Einstellungen exakt seinen persönlichen Bedürfnissen entsprechen.

Gemäss einer weiteren, bevorzugten Ausführungsform ist das Steuerelement ein Potentiometer, das heisst ein elektrischer Widerstand der in einem vorgegebenen Bereich variiert werden kann. Durch die mechanische, analoge Ausbildung des Steuerelements ist eine sehr einfache und kostengünstige Produktion des Steuerelementes und des Körperpflegegerätes möglich.

Gemäss einer bevorzugten Ausführungsform ist das Körperpflegegerät als Zahnbürste, insbesondere als Vibrationszahnbürste - oder rotierende Elektro-Zahnbürste, als Rasierer, insbesondere als Nassrasierer oder als Mascara-Farbapplikator ausgebildet.

Beispiele der Erfindung sind in den Zeichnungen dargestellt und nachfolgend beschrieben. Es zeigen rein schematisch:
Fig. 1 eine erfindungsgemässe Zahnbürste mit einer Endkappe, welche ein Steuerelement enthält;
Fig. 2 einen erfindungsgemässen Nassrasierer mit der Endkappe, welche das Steuerelement enthält;
Fig. 3 in Seitenansicht die Endkappe;
Fig. 4 in Frontalansicht die Endkappe;
Fig. 5 in Rückansicht die Endkappe, wobei insbesondere der zentrale Kontakt wie auch die seitlichen Kontakte sichtbar sind;
Fig. 6 die Endkappe in Schnittdarstellung;
Fig. 7 in Ansicht die elektrische Baugruppe der Endkappe;
Fig. 8 in perspektivischer Darstellung ein als Drehkappe ausgebildetes Einstellelement;
Fig. 9 in perspektivischer Darstellung ein Kernteil mit in diesem eingesetzten Kontaktstreifen und einer Feder;
Fig. 10 in perspektivischer Darstellung ein Schalenteil der Endkappe, wobei innerhalb der axialen Öffnung ein Mitnehmer sichtbar ist;
Fig. 11 in perspektivischer Darstellung die in Fig. 7 gezeigte elektrische Baugruppe mit dem in Fig. 8 gezeigten Einstellelement;
Fig. 12 - 20 verschiedene, als Potentiometer ausgebildeten Steuerelemente;
Fig. 21 das elektrische Schaltbild des elektrisch betriebenen Körperpflegegerätes;
Fig. 22 das Schaltbild der Endkappe;
Fig. 23 und 24 zwei unterschiedlich ausgebildete Kontaktelemente;
Fig. 25 - 33 in perspektivischer Darstellung oder Seitenansicht unterschiedliche Borstenbesätze für die Zahnbürste gemäss Fig. 1; und
Fig. 34 - 37 verschiedene Ausführungsformen eines elektrisch betriebenen Mascara-Applikators.
Fig. 40 in perspektivischer Ansicht eine weitere Ausführungsform einer erfindungsgemässen elektrischen Zahnbürste mit einem Einstellelement in der Endkappe;
Fig. 41 in perspektivischer Ansicht ein Innenleben der in Fig. 40 gezeigten Ausführungsform der elektrischen Zahnbürste;
Fig. 42 in perspektivischer Ansicht einen Ausschnitt des in Fig. 41 gezeigten Innenlebens mit einem in einen Spulenträger integriertem Potentiometer;
Fig. 43 in Draufsicht eine bekannte Wechselklinge für einen Nassrasierer;
Fig. 44-45 in Draufsichten Wechselklingen für Nassrasierer mit Heizelementen bzw. einem Heizstreifen;
Fig. 46 in einem Querschnitt eine Wechselklinge mit oberhalb und unterhalb von Schnittkanten der Klingenmesser am Wechselklingenrahmen angeordneten Heizelementen;
Fig. 47 in einer Seitenansicht eine Ausführungsform eines Nassrasierers mit einer elektrischen Steckverbindung zwischen der Wechselklinge und einem Halsbereich des Nassrasierers; und
Fig. 48 in einer Seitenansicht eine weitere Ausführungsform eines Nassrasierers mit beweglichen elektrischen Kontakten an einer Wechselkupplung zwischen der Wechselklinge und dem Halsbereich.

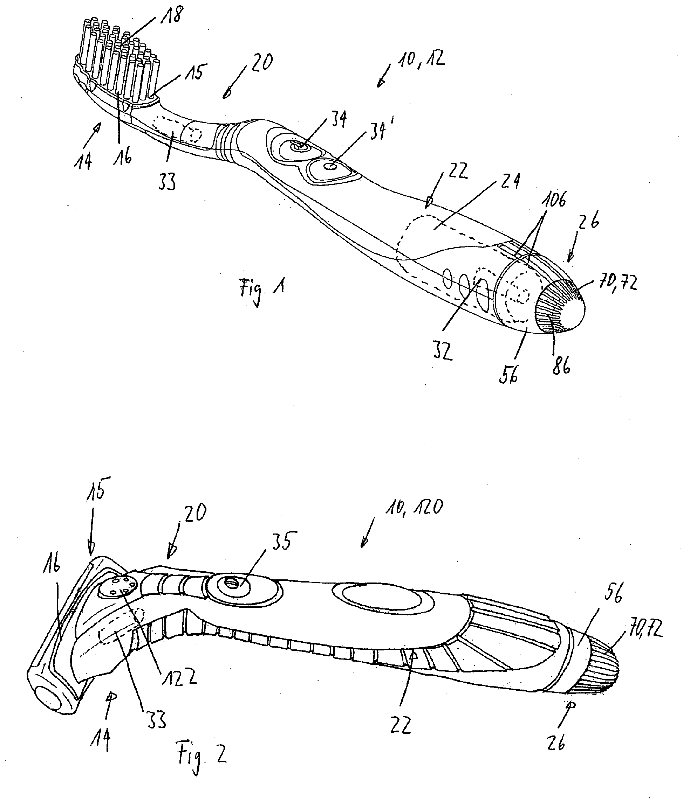

Fig. 1 zeigt beispielhaft ein als Zahnbürste 12 ausgebildetes, erfindungsgemässes, elektrisch betriebenes Körperpflegegerät 10. Andere Körperpflegegeräte wie andere Typen elektrische Zahnbürsten, elektrische Nassrasierer oder elektrische Mascara-Farbapplikatoren können analog aufgebaut werden.

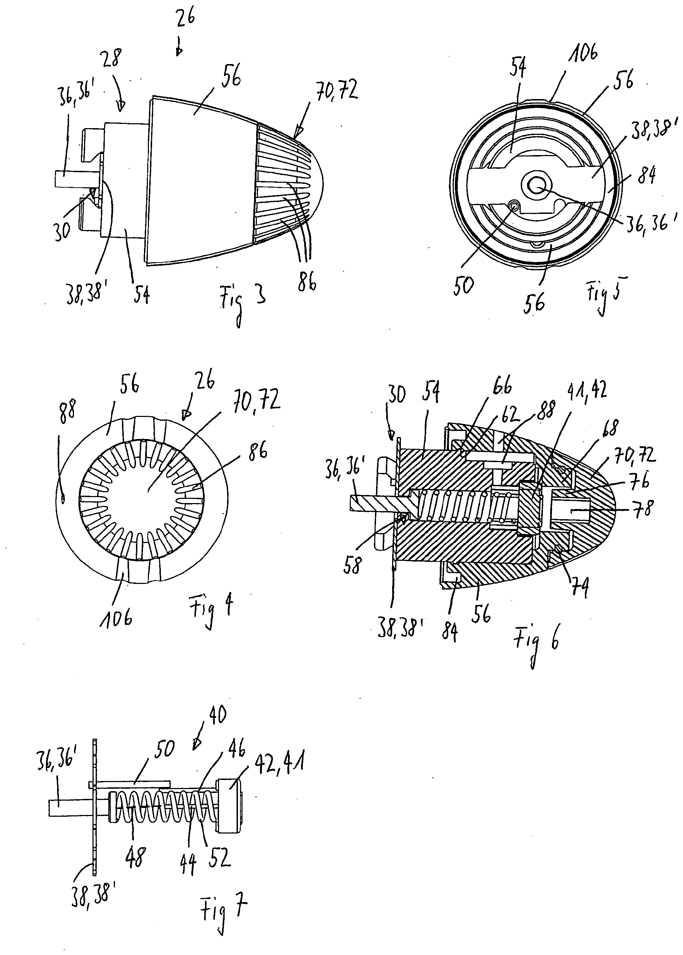

Die Zahnbürste 12 weist, in einem Kopfbereich 14 angeordnet, ein als auswechselbarer Bürstenkopf mit Borstenbesatz 18 ausgebildetes Pflegeelement 16 auf. An den Kopfbereich 14 schliesst ein Halsbereich 20 der Zahnbürste 12 an, der mit einem Griffkörper 22 der Zahnbürste 12 integral verbunden ist. Der länglich ausgebildete Griffkörper 22 weist einen in seiner Längsrichtung verlaufenden Innenraum 24 auf, welcher von der Hinterseite des Griffkörpers 22, die dem Kopfbereich 14 gegenüber liegt, zugänglich ist. Auf den Griffkörper 22 ist von der Hinterseite her eine Endkappe 26 aufgesetzt, deren Verbindungsendbereich 28 (siehe Fig. 3) in den Innenraum 24 eingeführt ist. Mittels eines Bajonettverschlusses 30 (siehe Fig. 3 und Fig. 6) ist die Endkappe 26 am Griffkörper 22 lösbar gehalten. Bei auf den Griffkörper 22 aufgesetzter Endkappe 26 ist der Innenraum 24 wasserdicht verschlossen.

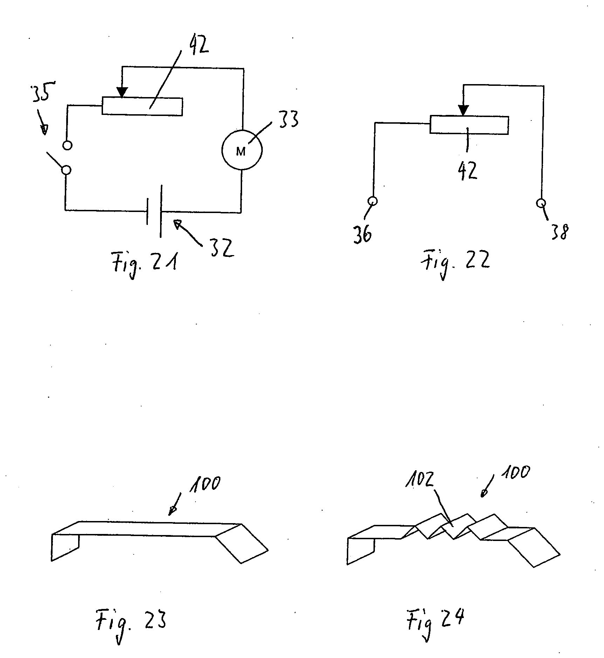

Im Innenraum 24 ist ein elektrischer Energiespeicher 32, welcher durch eine Batterie oder durch einen Akku ausgebildet sein kann, angeordnet. Der Energiespeicher 32 ist dazu bestimmt, einen elektrischen Verbraucher 33, im vorliegenden Fall ein Motor mit exzentrischem Schwingelement, mit Energie zu versorgen, der dazu bestimmt ist, den Kopfbereich 14 mit dem Pflegeelement 16 in Schwingung beziehungsweise in Vibration zu versetzen. Ein im Griffkörper 22 angeordneter Schalter mit einer Einschalttaste 34 und mit einer Ausschalttaste 34' dient dazu, den Stromkreis (siehe Fig. 21) zu unterbrechen bzw. zu schliessen und ist Bestandteil einer Steuereinrichtung der Zahnbürste 12. Weiter ist der Stromkreis durch Abnehmen der Endkappe 26 unterbrechbar, wodurch erreicht wird, dass die Zahnbürste 12 nur mit aufgesetzter Endkappe 26 betrieben werden kann.

Die in Fig. 1 und insbesondere in den Fig. 3 bis 6 dargestellte Endkappe 26 weist zwei Kontaktelemente 36, 38 auf, die elektrisch miteinander verbunden beziehungsweise verbindbar sind. Das eine Kontaktelement 36 ist als ein Verbindungsstift 36' ausgebildet, der in der Drehachse des Bajonettverschlusses 30 liegt. Das andere Kontaktelement 38 ist als Kontaktstreifen 38' ausgebildet, welcher rechtwinklig zum Verbindungsstift 36' steht und Teil des Bajonettverschlusses 30 ist. Um den elektrischen Kontakt zwischen dem Griffkörper 22 und der aufgesetzten Endkappe 26 herzustellen, weist der Griffkörper 22 einen Gegenkontakt auf, der mit dem Kontaktstreifen 38' kontaktbildend zusammenwirkt und der Energiespeicher 32 weist ein in Axialrichtung des Bajonettverschlusses 30 angeordnetes Kontaktelement auf, welches mit dem Verbindungsstift 36' kontaktbildend zusammenwirkt. Insbesondere bei einmalig verwendeten, d.h. nicht wieder aufladbaren Energiespeichern 32 (z.B. Batteriezellen der Grössen AA, AAA oder so genannten Knopfzellen) trifft der Verbindungsstift 36 direkt auf den Energiespeicher. Das Schaltbild der Endkappe 26 ist in Fig. 22 gezeigt.

Bei Ausgestaltung des Energiespeichers 32 als wiederaufladbarer Akku weist die Zahnbürste 12 eine im Innenraum 24, nahe dessen Öffnung liegende Buchse zum Einstecken eines Ladegerätes auf. Der zentrale Stift der Buchse bildet zudem das mit dem Verbindungsstift 36' zusammenwirkende Kontaktelement des Energiespeichers 32. Zum Aufladen des Akkus muss die Endkappe 26 folglich entfernt werden, wodurch die Buchse freigegeben wird. Dadurch ist sichergestellt, dass der Stromkreis zwischen dem Energiespeicher 32 und dem Verbraucher beim Ladevorgang unterbrochen ist, wodurch eine Verwendung der Zahnbürste 12 währenddessen ausgeschlossen ist. Folglich kann dadurch ungewolltes eindringen von Wasser in den Innenraum 24 der Zahnbürste 12 verhindert werden.

Die Zahnbürste 12 - wie oben beschrieben - ist aus der internationalen Anmeldung mit der Veröffentlichungsnummer WO 2005/046508 bekannt. Für den genauen Aufbau der Zahnbürste 12, insbesondere die Ausbildung des Halsbereichs 20, des Kopfbereichs 14, des Griffkörpers 22 mit dem daran angeordneten Gegenkontakt, der insbesondere mit einem Akku ausgebildete Energiespeicher 32 mit Kontaktelement, die Anordnung des elektrischen Verbrauchers und des am Griffkörper wie auch des an der Endkappe 26 ausgebildeten Bajonettverschlusses 30 wird auf genannte Veröffentlichung verwiesen. Dieser Veröffentlichung ist ebenfalls zu entnehmen, welche Materialien verwendet werden und wie der Herstellungsprozess abläuft. Weiter sind dieser Veröffentlichung die Schaltpläne der Ausführungsform mit Akku als Energiespeicher mit Ladevorrichtung für den Akku zu entnehmen.

Alternativ zu der beschriebenen Ladetechnik mittels Kontaktelementen 36, 38 zur Energieübertragung, kann auch die bekannte induktive Ladung eingesetzt werden. In diesem Fall wird die Endkappe 26 nur einmalig montiert und ein jeweiliges Öffnen des Innenraums 24 für den Ladevorgang ist nicht nötig. Im Unterschied zu anderen Zahnbürsten befindet sich eine Ladespule für die induktive Energieübertragung nicht am hinteren Ende des Griffkörpers 22 sondern weiter vorn im Griff in Richtung Kopfbereich 14. Das hintere Ende ist, wie in Fig. 1 gezeigt, durch die erfindungsgemässe Endkappe 26 eingenommen.

Fig. 3 bis Fig. 6 zeigen verschiedene Ansichten beziehungsweise Schnittdarstellungen der Endkappe 26. Diese weist äusserlich die selben Konturen, insbesondere im Verbindungsendbereich 28 (siehe Fig. 3), der dazu bestimmt ist, in den Innenraum 24 des Griffkörpers 22 einzugreifen, auf, wie die in WO 2005/046508 offenbarte Endkappe. Aus diesem Grund kann sie ohne Probleme gegen die in WO 2005/046508 offenbarte Endkappe ausgetauscht werden, ohne dass am bestehenden Gerät, insbesondere der Zahnbüste, Anpassungen vorgenommen werden müssen.

Eine in der Endkappe 26 enthaltene elektrische Baugruppe 40 ist in Fig. 7 gezeigt. Die elektrische Baugruppe 40 weist ein als drehbares Potentiometer 42 ausgebildetes Steuerelement 41 mit zwei auf die gleiche Seite vom Gehäuseteil des Potentiometers 42 wegstehenden Anschlussstiften 44, 46 auf. Der eine Anschlussstift 44 ist zentral vom Gehäuse weggeführt und der andere Anschlussstift 46 ist von einem Seitenbereich des Gehäuses weggeführt. Der zentrale Anschlussstift 44 ist über einen Litzendraht 48 mit dem Verbindungsstift 36' elektrisch verbunden, damit die Längenvariabilität einer Schraubenfeder 52 ausgeglichen werden kann. Diese Schraubenfeder 52 ist dazu bestimmt, den Verbindungsstift 36' federbelastet vom Potentiometer 42 weg zu drücken um eine gute elektrische Verbindung mit dem im Griffkörper 22 angeordneten Kontaktelement oder dem Energiespeicher direkt zu gewährleisten. Der andere, seitliche Anschluss des Potentiometers 42 ist über einen Kontaktstift 50 mit dem Kontaktstreifen 38' elektrisch verbunden, der Kontaktstreifen ist rechtwinklig zum Verbindungsstift 36' angeordnet. Der Verbindungsstift 36' ist durch eine mittig angeordnete Durchgangsöffnung im Kontaktstreifen 38' hindurch geführt, wobei der Durchmesser des Verbindungsstifts 36' kleiner gewählt ist als der Durchmesser der Durchgangsöffnung (siehe Fig. 5). Die beiden Kontaktelemente 36 und 38 sind gegeneinander isoliert oder wenigstens genügend beabstandet, sodass sich beim Schliessen des Stromkreises durch Aufsetzen der Endkappe 26 auf den Griffkörper 22 kein Kurzschluss zwischen den Kontaktelementen 36, 38 einstellen kann.

Weiter ist zwischen dem Verbindungsstift 36' und dem Potentiometer 42 eine als Druckfeder wirkende Schraubenfeder 52 angeordnet, welche zentral von dem Litzendraht 48 und dem Anschlussstift 44 durchgriffen ist. Um eine mechanische Belastung, insbesondere Abrieb, am Gehäuse des Potentiometers 42 durch die Schraubenfeder 52 zu verhindern, ist zwischen dem Potentiometer 42 und der Feder 52 eine Unterlegscheibe vorgesehen, welche durch ein elektrisch leitendes oder isolierendes Material ausgebildet sein kann.

Das zur elektrischen Baugruppe 40 dazugehörende Schaltbild ist in Fig. 22 gezeigt. Daraus ist ersichtlich, dass das Potentiometer 42 einerseits mit dem Kontaktelement 36 und andererseits mit dem Kontaktelement 38 elektrisch verbunden ist. Selbstverständlich können auch anders ausgestaltete, elektrisch leitende Kontaktelemente gewählt werden. Vorzugsweise findet die Kontaktierung zum Griffkörper 22 aber in einem gegenüber der Aussenwelt abgedichteten Bereich statt.

Das Schaltbild der mit einer einmalig verwendeten (Einweg-) Batterie oder einem wiederaufladbaren Akku als Energiespeicher 32 ausgebildeten Zahnbürste ist in Fig. 21 gezeigt. Der eine Pol des Energiespeichers 32 ist über den Ein-/Ausschalter 35, welcher die in Fig. 1 gezeigten Einschalttaste 34 und Ausschalttaste 34' aufweist, mit dem einen Anschlussstift des Potentiometers 42 verbunden. Der andere Anschlussstift des Potentiometers 42 ist über den elektrischen Verbraucher 33 mit dem anderen Pol des Energiespeichers 32 verbunden.

Bei den in Fig. 21 und 22 dargestellten Schaltbildern sind die im Schaltbild enthaltenen elektrischen Elemente vorzugsweise in Serie geschaltet. Bei eingeschaltetem Gerät wird der Stromfluss permanent über das Potentiometer geleitet. Folglich ist der Widerstand des Potentiometers bei maximaler Leistung des Verbrauchers vorzugsweise nahe 0 Ω (Ohm).

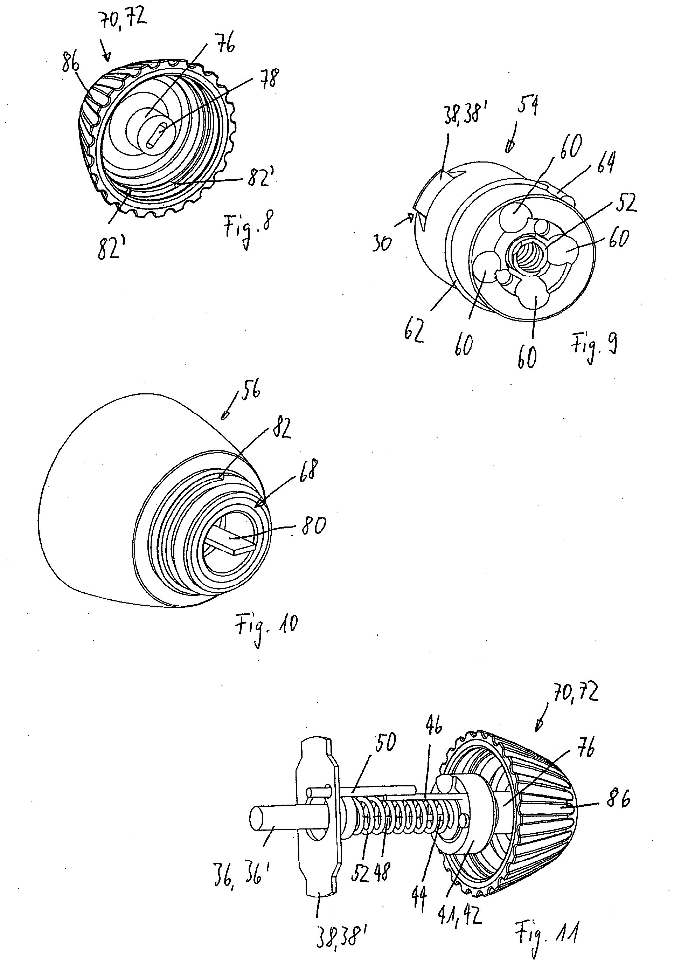

Die Elemente der elektrischen Baugruppe 40 sind in einem insbesondere in Fig. 9 gezeigten Kernteil 54 der Endkappe 26 (siehe Fig. 3 bis 6) eingesetzt und durch einen insbesondere in Fig. 10 gezeigten Schalenteil 56 der Endkappe 26, der auf den Kernteil 54 aufgesetzt ist, fixiert.

Der insbesondere in Fig. 9 gezeigte Kernteil 54 mit eingesetzter Schraubenfeder 52 sowie Kontaktstreifen 38', ist im wesentlichen kreiszylinderförmig ausgebildet. Jener Endbereich des Kernteils 54, welcher den Kontaktstreifen 38' in einer radialen, schwalbenschwanzförmigen Nut hält, bildet den in den Griffbereich 22 einführbaren Verbindungsbereich 28 der Endkappe 26. Der Kontaktstreifen 38' steht beidseitig über die Mantelfläche des Kernteils 54 vor und dient zum einen als Kontaktelement 38 und zum andern als Eingriffselement des Bajonettverschlusses 30, welches mit dem ebenfalls leitend ausgebildeten, am Griffkörper 22 angeordneten Gegenkontakt des Bajonettverschlusses 30 zusammen wirkt. Mittig und in Zylinderachsenrichtung verlaufend weist der Kernteil 54 eine Durchgangsöffnung auf, in welcher die Schraubenfeder 52 geführt ist. Die Durchgangsöffnung weist einerseits, im Verbindungsbereich 28 eine stufenartige Verjüngung 58 auf, welche einen Anschlag für einen tellerförmigen Kopf des Verbindungsstifts 36' bildet. Andererseits weitet sich die Durchgangsöffnung stufenartig auf einen Durchmesser auf, der im Wesentlichen jenem des Potentiometers 42 entspricht, sodass dieses in den aufgeweiteten Bereich einsetzbar ist. Parallel zur Durchgangsöffnung weist der Kernteil 54 vier seitliche Sacköffnungen 60 auf. In einer dieser vier seitlichen Sacköffnungen 60 befindet sich an der Sohle ein Durchgangsloch, durch welches der seitliche Anschlussstift 46 und der Kontaktstift 50 durch den Kernteil 54 geführt ist. Die seitlichen Sacköffnungen 60 dienen vor allem dazu, Material einzusparen und die Produktionszeit (Zykluszeit) des bevorzugt aus Kunststoff gefertigten Kernteils 54 zu minimieren.

Wie Fig. 9 zeigt, weist der Kernteil 54 seitlich eine umlaufende Wulst 62 sowie eine in Längsrichtung ausgerichtete Führungswulst 64 auf, welche dazu bestimmt sind, den Schalenteil 56 am Kernteil 54 mittels einer Schnappverbindung zu halten beziehungsweise die Lage des Schalenteils 56 bezüglich des Kernteils 54 in Umfangsrichtung zu fixieren. Die umlaufende Wulst 62 kann sowohl aus Hartkomponente als auch aus Weichkomponente oder einem O-Ring geformt sein. Die Weichkomponente würde direkt bei der Produktion als weitere Komponente angespritzt. Der Einsatz der Weichkomponente oder des O-Rings dichtet das Gerät zusätzlich gegen Wasser ab. Mögliche Materialien für die Weichkomponente als auch für die Hartkomponente sind weiter Hinten aufgeführt.

Auf den Kernteil 54 ist der Schalenteil 56 aufgesetzt und mittels der Schnappverbindung mit diesem verbunden. Hierzu weist der Schalenteil 56 eine mit der umlaufenden Wulst 62 des Kernteils 54 zusammenwirkende Nute 66 auf. Um die Lage des Schalenteils 56 im Umfangsrichtung bezüglich des Kernteils 54 zu definieren, weist der Schalenteil 56 eine mit der Führungswulst 64 zusammenwirkende Führungsausnehmung auf.

Im Inneren weist der Schalenteil 56 - siehe insbesondere Fig. 6 - eine gestufte, zylinderförmige Ausnehmung auf. Die Durchmesser der gestuften Ausnehmung sind derart gewählt, dass das Schalenteil 56 passend auf den Kernteil 54 aufsetzbar ist und das Potentiometer 42 zwischen am Kernteil 54 und am Schalenteil 56 ausgebildeten Anschlagsflächen eingeklemmt ist. Um die Lage des Potentiometers 42 in dessen Umfangsrichtung zu definieren, weist das Potentiometer 42 einen Vorsprung (siehe Fig. 11) auf, der in eine Vertiefung des Kernteils 54 eingreift, welche zwischen den seitlichen Sacköffnungen 60 ausgebildet ist. Dadurch lässt sich das Potentiometer 42 genau positionieren und gegen Verdrehung sichern. Es ist insbesondere darauf zu achten, dass diese Verdrehsicherung gegenüber dem Gehäuse des Potentiometers 42 und nicht gegenüber den fragilen elektrischen Anschlussstiften 44,46 gewählt wird.

Weiter weist der Schalenteil 56 einen kreiszylindrischen Hohlzylinderfortsatz 68 (siehe Fig. 6 und 10) auf. Auf diesen ist das als Drehkappe 70 ausgebildete Einstellelement 72 drehbar aufgesetzt. Die Achse des Hohlzylinderfortsatzes 68 liegt deckungsgleich mit der Drehachse des Einstellelements 72 und der Drehachse des Potentiometers 42 sowie der Achse des Verbindungsstifts 36'. Die äussere Mantelfläche des Hohlzylinderfortsatzes 68 weist eine umlaufende Nute auf, in welcher ein O-Ring 74 eingelegt beziehungsweise angespritzt ist, welcher zum einen als Dichtelement und zum anderen als Befestigungselement in Axialrichtung für das Einstellelement 72 dient. Dieser O-Ring, falls angespritzt, würde vorzugsweise wieder mit anderen z.B. haptischen Elementen aus Weichkomponente am Einstellelement 72 oder Holzylinderfortsatz 68 angespritzt. Dies gilt auch für alle anderen in dieser Schrift diskutierten O-Ringe oder andere Dichtungselemente.

Auf den Hohlzylinderfortsatz 68 ist das Einstellelement 70, 72 aufgesetzt. Das Einstellelement 70 weist eine umlaufende Nute auf, die mit dem am Hohlzylinderfortsatzes 68 angeordneten O-Ring 74 zusammenwirkt. Diese Nute, sowie die Nute 66 werden vorzugsweise während dem Spritzgussprozess zwangsentformt. Das Einstellelement 72 weist weiter einen zentralen Fortsatz 76 auf, der in den Hohlzylinderfortsatz 68 hineinragt und eine schlitzartige Aufnahme 78 aufweist. Ein Flachprofil-artiger Mitnehmer 80 (nur in Fig. 10 gezeigt) wird einerseits in die Aufnahme 78 des Einstellelements 72 und andererseits in eine Mitnehmerausnehmung des Potentiometers 42 eingesetzt. Durch diese mechanische Verbindung des Potentiometers 42 mit der Drehkappe 70 beziehungsweise dem Einstellelement 72 ist das ein Steuerelement 41 bildende Potentiometer 42 von aussen einstellbar.

Weiter weist der Hohlzylinderfortsatz 68 an seiner äusseren Mantelfläche zwei, in Fig. 10 gezeigte Anschlagsflächen 82 auf, welche mit Gegenanschlagsflächen 82' am Einstellelement 72 zusammenwirken, und dadurch einen Drehbereich des Einstellelements 72 definieren. Die Anschlagflächen 82 bilden zusammen mit den Gegenanschlagflächen 82' eine Einstellbegrenzung. Durch diese wird ein Überdrehen des Einstellelements 72 verhindert und zugleich wird ein Einstellbereich definiert, in welchem die Einstellung des Steuerelements 72 liegen kann. Es wird generell bei allen Ausgestaltungsvarianten vorgeschlagen, den Einstellbereich des Potentiometers 42 über Anschläge an Elementen des Gerätes zu definieren, obwohl marktübliche Potentiometer bereits über Anschläge verfügen können.

Vorzugsweise ist das Einstellelement 72 gegenüber dem Schalenteil 56 von einer definierten 0°-Stellung über einen Winkelbereich bis 350° drehbar; besonders bevorzugt ist eine Winkelbereich zwischen 150° bis 270°. Start und Endpunkte der Drehskala werden vorzugsweise auf einer Symmetrieachse der Endkappe 26 platziert. Die Intensität des Verbrauchers wird vorzugsweise mit einer Rechtsdrehung gesteigert und in Gegenrichtung vermindert.

Der Schalenteil 56 weist stirnseitig, dem Verbindungsendbereich 28 der Endkappe 26 zugewandt, eine umlaufende Nute 84 auf. In diese Nute 84 greift bei auf den Griffkörper 22 aufgesetzter Endkappe 26 (siehe Fig. 1) ein stirnseitig am Griffkörper 22 angeordneter Wulst ein. Damit kein Wasser in den Innenraum 24 eindringen kann, ist vorzugsweise ein Dichtungselement in die Nute 84 eingelegt. Selbstverständlich kann das Dichtungselement auch bei der Herstellung des Schalenteils an dieses angespritzt werden, vorzugsweise mit der Herstellung anderer Dichtungselemente oder haptischer Elemente aus Weichkomponente am Schalenteil 56.

Die äussere Form des Schalenteils 56 ist auf die äussere Form des Griffkörpers 22 derart abgestimmt, dass bei aufgesetzter Endkappe 26 ein kontinuierlicher Übergang zwischen dem Schalenteil 56 und dem Griffkörper 22 gebildet ist, wobei Querschnittsflächen nicht rotationssymmetrisch sein müssen.

Die Montage des Schalenteils 56 auf den Griffkörper 22 wird durch die kreisrunde Nute 84 am Schalenteil 56 und eine kreisrunden, vom Griffkörper 22 abstehende, in die Nute 84 eingreifende Wulst garantiert, was gleichzeitig auch eine optimale Abdichtung ermöglicht.

Das Einstellelement 72 weist eine vorzugsweise rotationssymmetrische äussere Form auf. Um einen kontinuierlichen Übergang zwischen dem Schalenteil 56 und dem Einstellelement 72 in jeder Drehlage zu gewährleisten, weist der Schalenteil 56 angrenzend an das Einstellelement 72 ebenfalls eine rotationssymmetrische äussere Form auf. Weiter ist die Oberfläche des Einstellelements 72 mit Furchen 86 oder anderen haptischen Elementen wie Noppen, Schuppen, Ringen oder dergleichen aus Hartkomponente, Weichkomponente oder einer Kombination davon (siehe Fig. 3, 4, 8 und 11) versehen, um dessen Griffigkeit zu erhöhen. Das Einstellelement 72 kann, wie in den Fig. 3 und 6 gezeigt, eine abgerundete Form aufweisen. Alternativ kann das Einstellelement 72 auch einen flachen Abschluss aufweisen, damit das Gerät bei Nichtgebrauch auf diesem flachen Abschluss vertikal aufgestellt werden kann. Weiter ist die Oberfläche des Schalenteils 56 mit Markierungen 106, beispielsweise Rillen, Zahlen, Zeichen oder dergleichen, versehen, welche im Griffkörper 22 fortgesetzt sind (siehe Fig. 4, 5 und insbesondere Fig. 1). Diese Markierungen können auch bedruckt oder aus einer Kombination von Weichkomponente und Hartkomponente gespritzt werden. Dadurch wird die Soll-Positionierung der vollständig aufgesetzten Endkappe 26 bezüglich des Griffkörpers 22 klar ersichtlich.

Eine zum Lösen des Bajonettverschlusses 30 aufzuwendende Kraft ist deutlich grösser als jene Kraft, die zum Drehen des Einstellelements 72 aufzuwenden ist. Vorzugsweise ist das zum Öffnen des Bajonettverschlusses 30 benötigte Drehmoment mindestens 10% vorzugsweise 30% grösser als das zum Drehen des Einstellelements 72 benötigte Drehmoment. Bei allen Lösungsvarianten ist ebenfalls darauf zu achten, dass die Verdrehsicherung des Potentiometers 42 genügend standhaft gewählt wird, dass die Endkappe 26 notfalls auch durch Drehen des Einstellelements 72 gegen den am Schalenteil 56 angeordneten Anschlag oder gegebenenfalls einen Anschlag des Potentiometers 42 geöffnet werden könnte.

In radialer Richtung weist das Schalenteil 56, wie auch der Kernteil 54, eine Entgasungsausnehmung 88 auf, die im zusammengesetzten Zustand der Endkappe 26 deckungsgleich angeordnet sind, sodass im Falle von austretenden Gasen aus dem Energiespeicher 32, insbesondere bei Verwendung eines Akkus als Energiespeicher, diese aus dem Innenraum 24 durch die Endkappe 26 hindurch, austreten können. In der Entgasungsausnehmung 88 ist zudem eine nicht gezeigte Membrane angeordnet, sodass kein Wasser in das Innere der Endkappe 26 eindringen kann, jedoch die Gase aus dem Innenraum 24 und der Endkappe 26 austreten können. Vorzugsweise wird die Membrane auf das Kernteil 54 aufgeklebt und gegenüber dem Schalenteil 56 derart freigestellt, dass die Membrane bei der Montage des Schalenteils 56 auf das Kernteil 54 nicht durch den Schalenteil 56 berührt und folglich beschädigt wird. Die Entgasungsausnehmung 88 des Kernteils 54 ist dementsprechend auszuformen. Bei Verwendung einer Einwegbatterie als Energiespeicher kann auf die Entgasungsausnehmung 88 im Schalenteil 56 wie auch im Kernteil 54 vollends verzichtet werden.

Als Material für den Kernteil 54, den Schalenteil 56 wie auch für das Einstellelement 72 wird bevorzugt ein HartKunststoff beziehungsweise eine Hartkomponente wie beispielsweise Polypropylen (PP), Polyester (PET), Polyethylen (PE), Polystyrol (PS), Styrolacrylnitril (SAN), Polyoxymethylen (POM), Polymethylmethacrylat (PMMA), Acrylnitrilbutadienstyrol (ABS), Polycyclohexandiamethanoltherephtalat (PCT/PCT-A (säuremodifiziert)/PCT-G (glykolmodifiziert)) und Polyamid (PA) verwendet, wobei vorzugsweise Polypropylen (PP) zur Anwendung gelangt. Das Elastizitätsmodul von Polypropylen liegt vorzugsweise zwischen 1000 N/mm² bis 2400 N/mm² und besonders bevorzugt zwischen 1300 N/mm² bis 1800 N/mm². Die erwähnten, aus Kunststoff gefertigten Teile können auch aus mehreren Hartkomponenten bestehen, welche vor allem der optischen Ausgestaltung der Teile dienen. Des weiteren können die besagten Teile auch mit zusätzlichen Weichkomponenten ausgestattet werden.

Das Einstellelement 72 wie auch das Schalenteil 56 kann an seiner aussenliegenden Oberfläche weiter Flächen oder Elemente aus Weichkomponente aufweisen, wodurch die Haptik beziehungsweise der Grip verbessert werden kann. Der Dichtungsring und der O-Ring sind ebenfalls - wie bereits erwähnt - aus einer Weichkomponente gefertigt. Als Weichkomponente wird beispielsweise "low density Polyethylen" (PE-LD), "high density Polyethylen" (PE-HD), Polyethylen (PE), ein gummielastischer Werkstoff wie Polyurethan (PUR), ein thermoplastisches Elastomer (TPE), Polyvinylchlorid (PVC) verwendet, wobei bevorzugt ein thermoplastischer Elastomer (TPE) verwendet wird. Die Shore-A Härte des thermoplastischen Elastomers liegt vorzugsweise unter 90. Die Weichkomponente wird in einem vorzugsweise direkt an den Spritzvorgang der Hartkomponente anschliessenden Spritzvorgang an diese angespritzt. Vorzugsweise werden die Teile aus zwei oder mehreren Kunststoffkomponenten im Mehrkomponentenspritzgussverfahren hergestellt.

Die elektrisch leitenden Teile wie die Kontaktelemente 36, 38, Litzendraht 48, Unterlegscheibe, Kontaktstift 50 und Blechteil 100 sind vorzugsweise aus einem rostfreien, oberflächenbehandelten oder veredelten Metall gefertigt, damit die elektrische Leitung einwandfrei funktioniert.

Die Endkappe 26 des erfindungsgemässen elektrisch betriebenen Körperpflegegeräts 10 wird wie folgt montiert:

Anfänglich wird der Kontaktstreifen 38' in den Kernteil 54 eingeführt. Nachfolgend wird der seitliche Anschlussstift 46 des Potentiometers 42 durch den Kontaktstift 50 erweitert, wobei hier vorzugsweise die Verbindung durch löten erfolgt. Weiter wird die Unterlegscheibe auf der Seite der Anschlüsse des Potentiometers 42 angeordnet und am zentralen Anschlussstift 44 des Potentiometers 42 wird der Litzendraht 48 elektrisch leitend angebracht. Danach wird die Feder 52 über den Litzendraht 48 und den zentralen Anschlussstift 44 geschoben. Dann wird der Verbindungsstift 36' mit seinem tellerförmigen Ende an der Schraubenfeder 52 angelegt, und mit dem Litzendraht 48 leitend verbunden. Beim darauf folgenden Schritt wird das Potentiometer 42 mit den daran leitend verbundenen Teilen in das Kernteil 54 eingeführt und der Kontaktstift 50 mit dem Kontaktstreifen 38' elektrisch leitend verbunden. Danach wird der Schalenteil 56 auf den Kernteil 54 aufgesetzt, wobei dabei das Schalenteil 56 durch den Führungswulst 64 geführt wird und die umlaufende Wulst 62 des Kernteils 54 in die umlaufende Nut 66 des Schalenteils 56 einrastet. Weiter wird der O-Ring 74 in die Nute am Hohlzylinderfortsatz 68 eingesetzt, sofern dieser nicht bei der Produktion des Schalenteils 56 direkt an diesen angespritzt wurde. Weiter wird der Mitnehmer 80 in die Ausnehmung des Einstellelements 72 eingesetzt und das Einstellelement 72 wird zusammen mit dem Mitnehmer 80 auf den Schalenteil aufgesetzt, wobei auf korrekte Einführung des Mitnehmers 80 in die Mitnehmeraufnahme 78 des Potentiometers 42 zu achten ist.

Jegliche Teile, die im Stromkreis in Serie liegen, werden vorzugsweise elektrisch leitend verbunden, das heisst sie werden gelötet, verpresst, genietet, geklebt etc. Dadurch wird die elektrische Verbindung der Teile sichergestellt, da die Teile ohne Verbindung ansonsten verrutschen können oder sich Staub- und/oder Dreckpartikel in die Verbindung legen können und so der Stromkreis unterbrochen werden könnte.

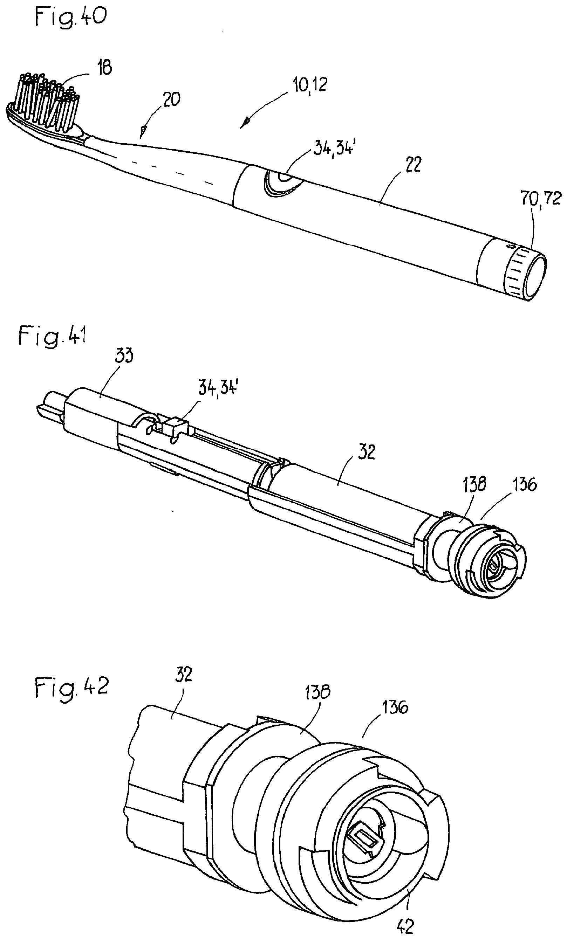

Alternativ kann das Potentiometer 42 auf einer Trägereinheit der elektrischen Zahnbürste 12 angebracht werden, sodass die Verstellung immer noch am Ende der zahnbürste 12 erfolgen kann, siehe Fig. 40, Fig. 41 und Fig. 42. Die Endkappe 26 kann nicht mehr abgenommen werden. Das Potentiometer 42 ist wie in Fig. 41 und 42 dargestellt in einem Spulenträger 136 angeordnet. Die Spule (in den Abbildungen nicht dargestellt) wird in eine vorzugsweise umlaufende Spulenausnehmung 138 angebracht. Die Spule ist für die induktive Ladung der Zahnbürste 12 in einer Ladestation zuständig und liegt in Richtung zum Kopfbereich 14 vor dem Potentiometer 42, also nicht am freien Ende des Griffkörpers 22. Der Stromkreis verbindet die verschiedenen elektrischen Komponenten und führt durch das Potentiometer 42, welches am freien Endbereich der elektrischen Zahnbürste 12 angebracht ist. Das Gehäuse der Zahnbürste 12 ist am hinteren freien Ende abgeflacht, sodass sie darauf abgestellt werden kann. Der Spulenträger 136 ist einstückig ausgebildet. Die Funktionen und der Aufbau des Potentiometers 42 sind analog den vorgängig beschriebenen.

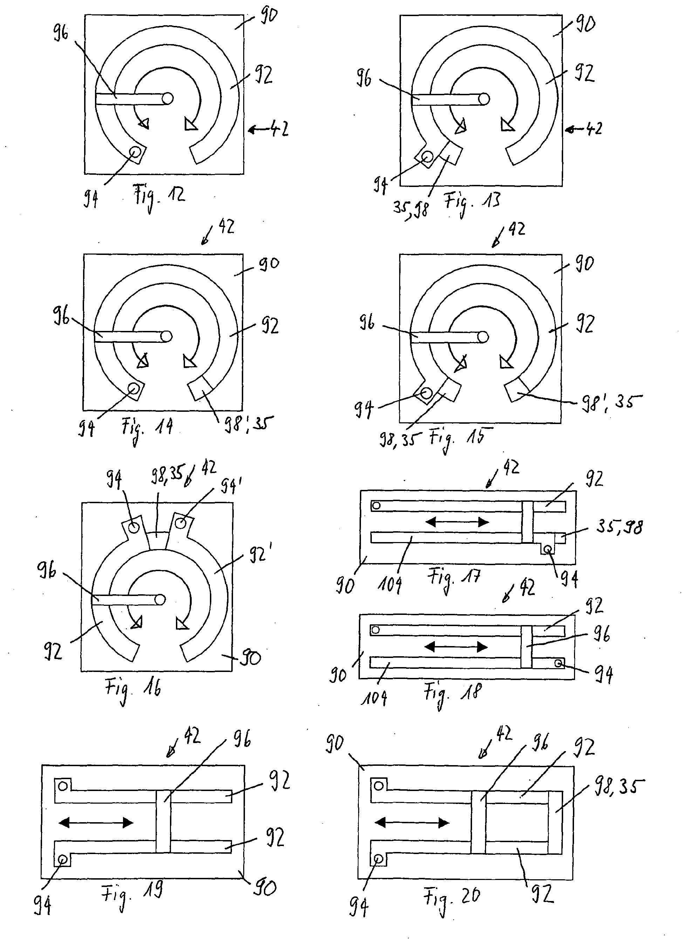

Fig. 12 zeigt in Draufsicht auf eine erste Ausführungsform des Potentiometers 42 (ohne Gehäuse des Potentiometers). Das Potentiometer 42 weist einen nichtleitenden Träger 90 aus Keramik oder Hartpapier auf, auf welchen ein leitender Teilkreisbogen 92 aufgebracht ist. Der Teilkreisbogen 92 ist beispielsweise durch eine Kohleverbindung beziehungsweise Karbonverbindung, einen Ceramed beziehungsweise Cermet, aus einem radial gewickelten Widerstandsdraht oder aus einem Leitplastik geformt. Der Teilkreisbogen 92 bildet den Widerstand und ist mit einem stationären, ersten Kontakt 94 elektrisch verbunden, welcher beispielsweise mit dem seitlichen Anschlussstift 46 des Potentiometers 42 elektrisch verbunden ist. Weiter weist das Potentiometer 42 einen drehbaren, elektrisch leitenden Abgriff 96 auf, der sich einerseits auf dem Teilkreisbogen 92 kontaktbildend abstützt und anderseits im Drehzentrum des Abgriffes 96 mit einem zweiten Kontakt verbunden ist, der beispielsweise mit dem zentralen Anschlussstift 44 des Potentiometers 42 elektrisch verbunden ist. Vorzugsweise weist das Potentiometer 42 an beiden Enden des Teilkreisbogens 92 eine Drehbegrenzung auf, sodass der Abgriff 96 nur auf dem Teilkreisbogen bewegt beziehungsweise gedreht werden kann. Da die Endkappe 26 bereits eine Drehbegrenzung, gebildet durch die Anschlagsflächen 82 und die Gegenanschlagsflächen 82', aufweist, kann jedoch auf die Drehbegrenzung am Potentiometers 42 verzichtet werden.

Eine in Fig. 13 gezeigte, weitere Ausführungsform des Potentiometers 42 weist einen zusätzlichen Ein-/Ausschalter auf, der durch einen nichtleidenden Endbereich 98 des Teilkreisbogens 92 ausgebildet ist. Die Positionierung des Abgriffs 96 auf dem nichtleitenden Endbereich 98 unterbricht den Stromkreis zwischen dem Kontakt 94 und dem Abgriff 96. Der Endbereich 98 schliesst beim ersten Kontakt 94 an den Teilkreisbogen an, wobei der erste Kontakt 94 in dieser Ausführungsform seitlich, radial nach aussen versetzt ist. Folglich kann bei Verwendung eines Potentiometers 42, wie in Fig. 13 gezeigt, auf den Ein-/Ausschalter 34, 34' (siehe Fig. 1) im Griffkörper 22 der Zahnbürste 12 verzichtet werden.

Eine weitere Ausführungsform des Potentiometers 42 ist in Fig. 14 gezeigt. Dieses Potentiometer 42 weist, im Unterschied zu dem in Fig. 13 gezeigten, den an den Teilkreisbogen 92 anschliessenden nichtleitenden Endbereich 98' in Umfangsrichtung am gegenüberliegenden Ende auf. Dies hat zur Folge, dass der Ein-/Ausschalter anschliessend zum maximalen Widerstand des Potentiometers angeordnet ist. Im Gegensatz dazu, ist der Ein-/Ausschalter des in Fig. 13 gezeigten Potentiometers 42 anschliessend an den minimalen Widerstand des Potentiometer angeordnet.

In Fig. 15 ist eine weitere Ausführungsform des Potentiometers 42 gezeigt, welche eine Kombination der Potentiometer 42 gemäss Fig. 13 und Fig. 14 darstellt. Dieses Potentiometer 42 weist in Umfangsrichtung des Teilkreisbogens beidseitig einen nichtleitenden Endbereich 98, 98' auf. Dadurch weist das Potentiometer 42 anschliessend zum maximalen Widerstandsbereich wie auch zum minimalen Widerstandsbereich einen Ein-/Ausschalter auf.

Die Widerstandscharakteristik des Potentiometers 42, insbesondere dessen maximaler Widerstand, ist auf die verwendete Steuereinrichtung im Griffkörper 22 und den elektrischen Verbraucher 33 abzustimmen, sodass die bestimmungsgemässe Funktion des Verbrauchers 33 gewährleistet ist. Im vorliegenden Ausführungsbeispiel der elektrischen Zahnbürste 12 sowie in den folgenden Ausführungsbeispielen für einen Nassrasierer und eines Mascara-Farbapplikators, ist der elektrische Verbraucher ein Elektromotor, der zum Anfahren eine gewisse Mindestspannung von in etwa 0.3 V bis 0.6 V und damit zusammenhängend einen entsprechenden Anlaufstrom benötigt. Der maximale Spannungsabfall über dem Potentiometer 42 beziehungsweise über der Steuereinrichtung darf folglich nicht zu einer Spannung von unterhalb der Mindestspannung über dem elektrischen Verbraucher führen, da ansonsten dieser nicht arbeitet (Strom kleiner als Anlaufstrom), aber trotzdem Strom verbraucht, und somit nicht bestimmungsgemäss funktioniert. Vorzugsweise wird der maximale mögliche Spannungsabfall über dem Potentiometer so eingestellt, dass auch bei teilentladenem, schwächerem Energiespeicher 32 die Mindestbetriebsspannung des Verbrauchers 33 noch erreicht wird.

Ein minimaler Widerstand des verwendeten Potentiometers 42 liegt vorzugsweise nahe 0 Ω. Der maximale Widerstand liegt vorzugsweise bei etwa 1 MΩ. Besonders bevorzugt kann mit dem Potentiometer 42 ein Widerstand zwischen 1 Ω und 50 Ω eingestellt werden.

Das Potentiometer 42 ist dazu ausgelegt, dass ein Strom mit einer Stromstärke zwischen 0.01 A bis 4 A fliessen kann. Vorzugsweise fliesst ein Strom der Stärke von 0.05 A bis 1 A.

Über die benötigte elektrische Auslegung von verschiedenen Verbrauchern gibt folgende Tabelle Auskunft, es sind verschiedene diskrete Beispiele aufgeführt:

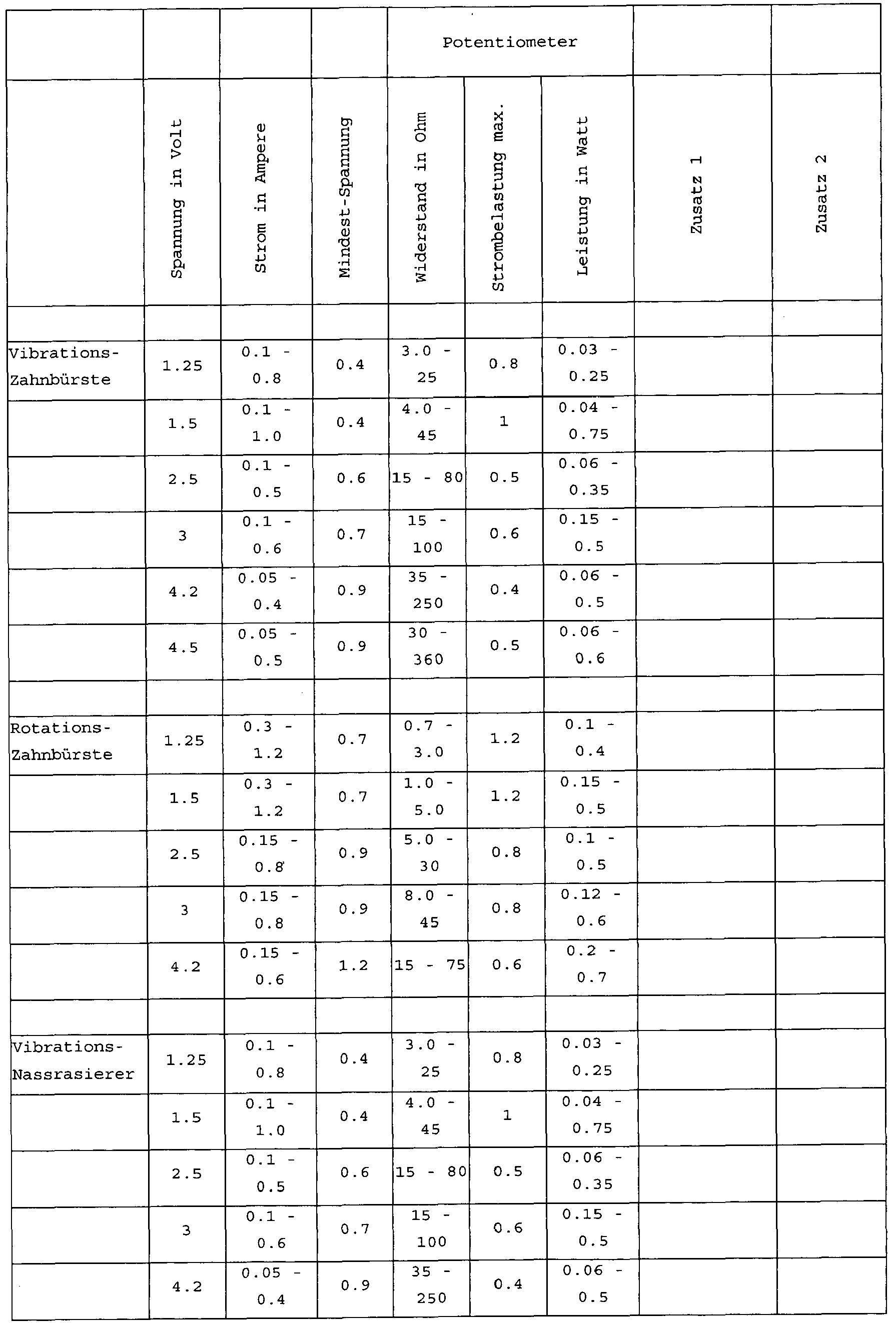

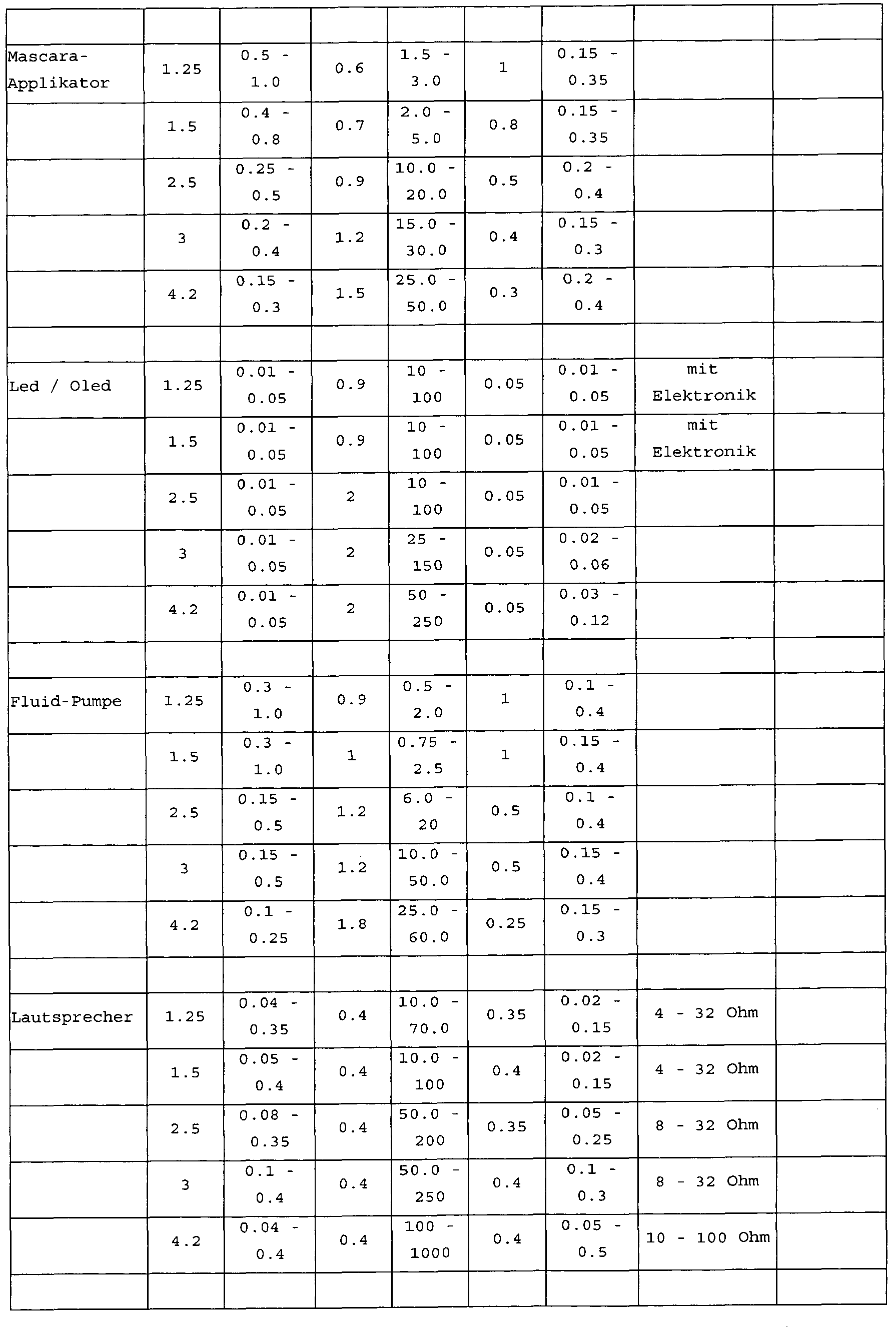

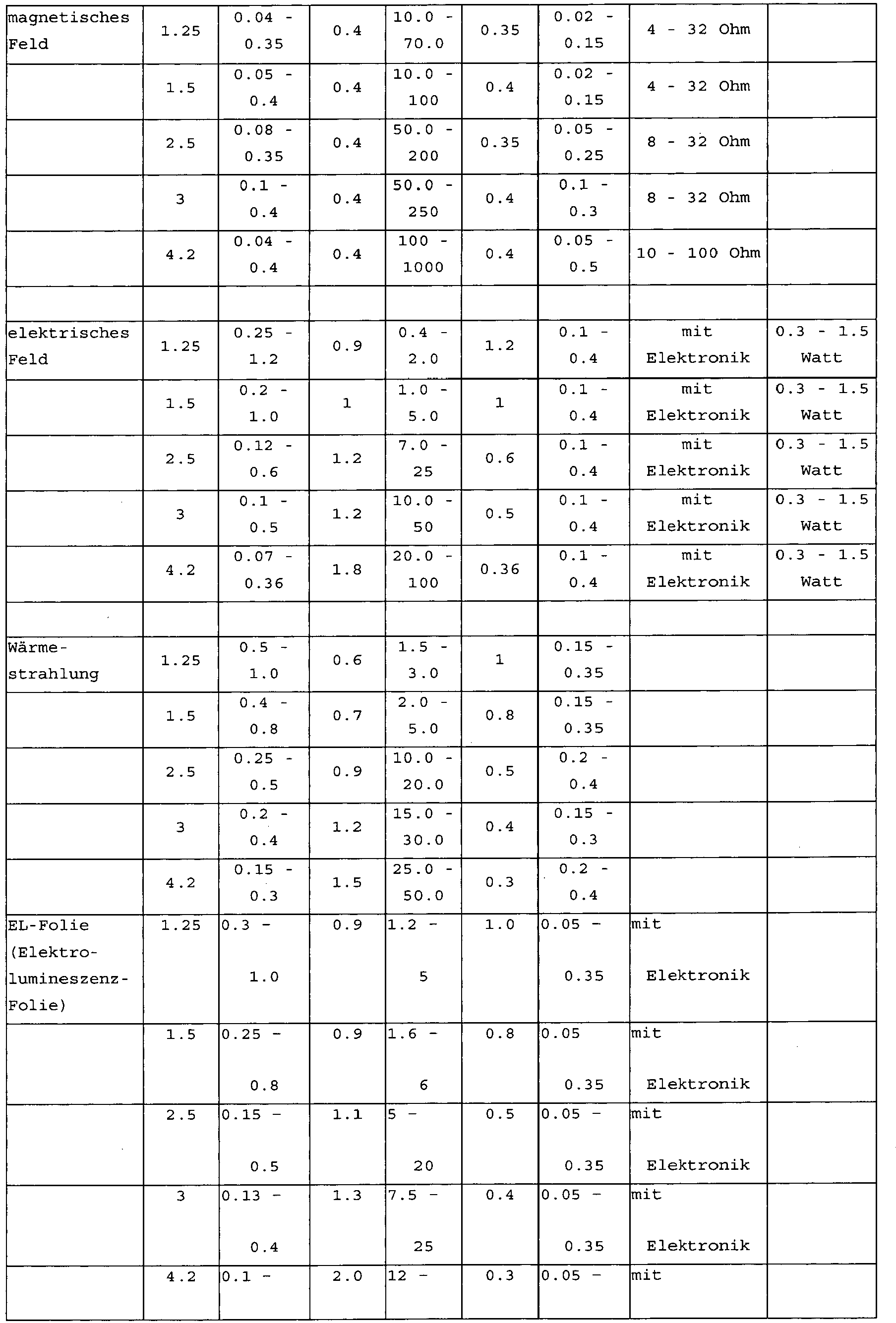

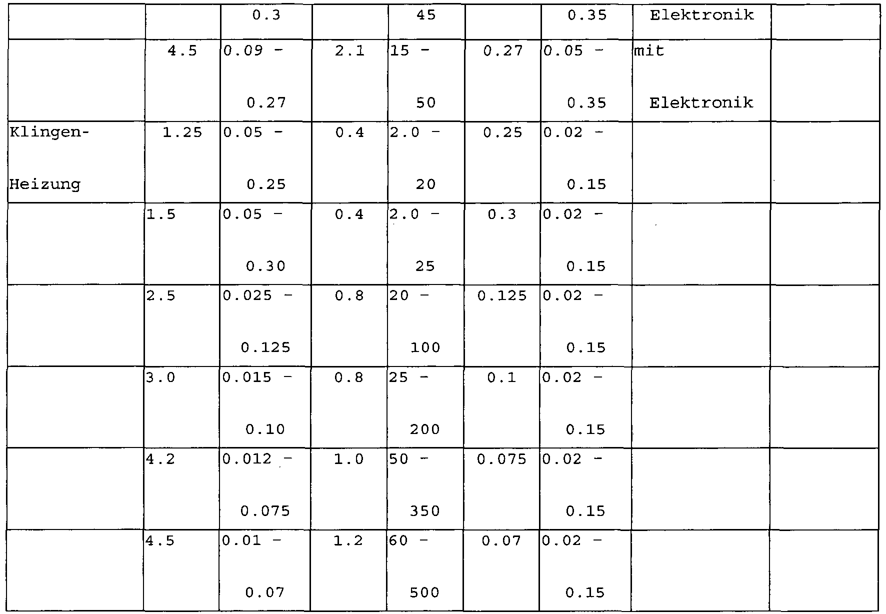

Zur Erklärung der einzelnen Rubriken: Spannung in Volt gibt an, wie gross die Versorger-Spannung ist, d.h. die Spannung des voll geladenen Energiespeichers. Strom in Ampere gibt die maximale Stromstärke im Stromkreis für die jeweilige Applikation an. Mit Mindestspannung ist jene Spannung bezeichnet, welche mindestens benötigt wird, um den Verbraucher zu betreiben/in Funktion zu bringen. Unter Potentiometer 42 sind die einzelnen Kennzahlen des Potentiometers 42 angegeben, es sind sogenannte mechanische Grössen des Potentiometers 42. Widerstand in Ohm gibt den maximalen Gesamtwiderstand des Potentiometers 42 an, d.h. das Potentiometer 42 kann im Bereich von nahe 0 Ohm bis zur angegebenen Grösse reguliert werden (ist durch die Mindest-Spannung beeinflusst). Die Strombelastung max gibt an, wie gross die maximale Stromstärke ist, die das Potentiometer 42 verträgt. Die Leistung in Watt gibt an, wie gross die Leistungsaufnahme des Potentiometers 42 ist. Unter Zusatz 1 sind zu den verschiedenen Verbrauchern verschiedene Daten angegeben. Bei der LED ist angegeben, bei welchen noch eine Elektronik (d.h. Wandler etc.) nötig ist, um sie zu betreiben, diese sind in den Zahlen bereits eingerechnet. Bei den Lautsprechern sind die Widerstandsbereiche der möglichen Lautsprecher angegeben. Beim magnetischen Feld sind die möglichen Widerstände der Spule, die das Magnetfeld erzeugt, aufgetragen. Beim elektrischen Feld ist unter Zusatz 1 angegeben, dass es jeweils Wandler braucht, um das elektrische Feld zu erzeugen. Unter dem Zusatz 2 ist die Leistung des Wandlers angegeben.

Die in der Tabelle beschriebenen Zusatzapplikationen wie beispielsweise der Lautsprecher oder die Wärmestrahlung sind auf allen Körperpflegegeräten denkbar, die mit einem erfindungsgemässen Steuerelement ausgestattet sind.

Um eine möglichst grosse Handlichkeit und Ergonomie zu gewährleisten und das Potentiometer 42 in einem Verschluss unterzubringen zu können, ist auf möglichst geringe Einbaumasse und Gewicht des Bauteiles zu achten. Aus diesem Grund weist ein Potentiometer 42 ein Gewicht kleiner 10g, vorzugsweise kleiner 2g auf. Das Volumen des Potentiometers 42, ohne abstehende Kontakte, wird vorzugsweise kleiner 10'000 mm³, insbesondere kleiner 1'000 mm³ gewählt.

Der Drehbereich des Potentiometers 42 ist an den Drehbereich/Winkelbereich des Einstellelements 72 angepasst und durch die am Einstellelement 72 angebrachten Begrenzungen limitiert.

In einer weiteren Ausführungsform der Endkappe 26 werden Markierungen angebracht, welche die Einstellung des Steuerelements beziehungsweise des Einstellelements 72 angeben und/oder fixieren. Solche Markierungen können einfache Striche, sich verbreiternde Striche, ein sich vom Minimum zum Maximum verbreiternder Strich, "Min" und "Max", "Ein" und "Aus" oder "Massage" und "Reinigung" oder eine beliebige Kombination solcher Markierungen sein, damit optisch die Position der Einstellung, d.h. die Intensität, festgestellt werden kann. Diese Markierungen werden direkt bei der Herstellung des Einstellelements 72 und des Schalenteils 56 angebracht und können entweder aus einer Weichkomponente, einer Hartkomponente, oder aus einer Kombination bestehen. Des Weiteren können solche Markierungen auch mittels Bedrucken oder Prägen aufgetragen werden. Weiter können mechanische Rastelemente am Einstellelement 72 und am Schalenteil 56 vorgesehen sein, sodass die relative Lage des Einstellelements 72 bezüglich des Schalenteils 56 hörbar und/oder fühlbar ist. Eine Stärke des hörbaren beziehungsweise fühlbaren Einrastens kann in Abhängigkeit des eingestellten Widerstandes und der daraus resultierenden Intensität des Verbrauchers 33 ausgestaltet sein.

In einer weiteren Ausführungsform der Endkappe 26 wird die elektrische Baugruppe 40 mit kundenspezifisch hergestellten Bauteilen ausgebildet. Beispielsweise kann der seitliche Anschlussstift 46 des Potentiometers 42 um etwa die Länge des Kontaktstiftes 50 verlängert werden, sodass auf diesen verzichtet werden kann. Der Anschlussstift 44 des Potentiometers 42 kann so angepasst werden, dass der Übergang zum weiteren Element im Stromkreis reibungslos verläuft. Eine weitere Vereinfachung des Aufbaus der elektrischen Baugruppe 40 kann dadurch erreicht werden, dass die Schraubenfeder 52 einerseits mit dem zentralen Anschlussstift 44 elektrisch verbunden wird und anderseits kontaktbildend an den tellerförmigen Endbereich des Verbindungsstifts 36' anliegt. Dadurch wird erreicht, dass auf den Litzendraht 48 verzichtet werden kann. In einer weiteren Ausführungsform wird anstelle der Schraubenfeder 52 und des Litzendrahtes 48 eine Blattfeder 100 gemäss Fig. 23 beziehungsweise Fig. 24 eingesetzt. Bei Verwendung einer dieser Blattfedern 100 ist der zentrale Anschlussstift 44 sehr kurz, beispielsweise durch einen flächigen Kontakt auf der Anschlussseite des Potentiometers 42, ausgebildet. An diesen Kontakt wird ein rechtwinklig abgewinkelter Kontaktbereich der Blattfeder 100 elektrisch leitend angelegt beziehungsweise verbunden. Das gegenüberliegende Ende der Blattfeder 100 ist in einem Winkel von 20 bis 70 Grad, vorzugsweise von 40 bis 50 Grad abgewinkelt, wodurch eine Federwirkung entsteht. Dieser Endbereich wird kontaktbildend an den Verbindungsstift 36' in Anlage gebracht. Die in Fig. 24 gezeigte Blattfeder 100 weist zusätzlich, zwischen den beiden Kontaktenden der Blattfeder 100 angeordnet, einen balgartigen Federabschnitt 102 auf, der die Federwirkung der Blattfeder 100 in ihrer Längsachse vergrössert. In einer weiteren Ausbildungsform kann auf den Verbindungsstift 36' ebenfalls verzichtet werden, wobei dann die Länge der Schraubenfeder 52 zu vergrössern ist und diese das Kontaktelement 36 zum Energiespeicher wie auch über die Unterlegscheibe zum Potentiometer 42 bildet, wobei in dieser Ausführungsform die elektrische Leitfähigkeit der Feder zu optimieren ist. In einer weiteren Ausgestaltungsvariante kann auch die Blattfeder verlängert werden, sodass sie das Kontaktelement bildet. Des weiteren ist es auch möglich den Anschlussstift 44 des Potentiometers 42 direkt als federndes Kontaktelement auszugestalten, sodass auf Feder, Litzendraht 48 und Verbindungsstift 36' verzichtet werden kann.

In einer weiteren Ausführungsform ist der Mitnehmer direkt am Einstellelement 72 ausgebildet, wodurch das Zusammensetzen ebenfalls vereinfacht wird. Zudem kann die Aufnahme des Mitnehmers am Potentiometer 42 kundenspezifisch angepasst werden, damit diese gegenüber einem einfachen Schlitz stabiler geformt sind. Der Mitnehmer beziehungsweise die Aufnahme am Potentiometer 42 kann z.B. als Innensechskant (Inbus), Torx, oder als Kreuzschlitz oder dergleichen Diese Kraftübertragung sollte so ausgestaltet werden, dass diese ebenso stabil ist, wie die Verdrehsicherung. Weiter kann das freie Ende des Mitnehmers in einer möglichen Ausgestaltungsvariante direkt den drehbaren oder linear verschiebbaren Abgriff 96 des Potentiometers 42 bilden, wobei dieser selbstverständlich aus einem elektrisch leitenden Material ausgebildet sein muss. Weiter weist in diesem Fall das Potentiometer 42 kein eigenes Gehäuse auf. Zudem ist es generell möglich, dass das Potentiometer 42 kein eigenes Gehäuse aufweist, da es geschützt im Bauteil eingebaut ist. Dies ermöglicht eine grössere, insbesondere breitere Ausführung des Teilkreisbogens 92 und somit auch des Abgriffs 96, wodurch eine Wärmeabgabe beziehungsweise der Stromfluss verbessert werden kann. Das Potentiometer 42 muss generell so ausgelegt sein, dass einerseits der Stromfluss und andererseits die Wärmeabgabe gewährleistet werden kann. Das heisst, dass sowohl der Teilkreisbogen 92, als auch die Übergange vom und zum Teilkreisbogen, das heisst vom ersten Kontakt 94 zum Teilkreisbogen 92 und vom Teilkreisbogen 92 zum Abgriff 96, entsprechend ausgelegt sein müssen.

Anstelle der Anordnung des elektrischen Steuerelementes 41 in der Endkappe 26 kann dieses selbstverständlich auch im Griffkörper 22 angeordnet sein. Das Steuerelement 41 kann beispielsweise mit einem drehbaren, von Hand betätigbaren Einstellelement, insbesondere einem Einstellrad, mechanisch verbunden sein. Die Umfangsfläche dieses Einstellrades kann entweder vollständig oder nur teilweise über die umgebende Oberfläche des Griffkörpers 22 vorstehen. Eine Drehachse des Einstellrades liegt entweder in der Achse des Griffkörpers 22 oder steht zumindest in etwa rechtwinklig zu dieser. Angeordnet werden kann das Einstellrad zwischen dem Bereich der Auflage der Finger beziehungsweise des Daumens und dem dem Kopfbereich 14 gegenüberliegenden Endbereich des Griffkörpers 22, vorzugsweise am gegenüberliegenden Ende des Behandlungskopfs oder Pflegeelementes 16 oder im Bereich der Auflage der Finger.

Weiter kann das Steuerelement 41 auch mit einem linear beweglichem, von Hand betätigbaren Einstellelement 72 anstelle des drehbaren Einstellelements 72 verbunden sein. In diesem Fall wird vorzugsweise ebenfalls ein linear verschiebbares Potentiometer 42 verwendet. Solche sind in den Fig. 17 bis Fig. 20 dargestellt und nachfolgend beschrieben. Selbstverständlich kann die lineare Bewegung auch mechanisch in eine kreisförmige Bewegung beziehungsweise eine kreisförmige Bewegung in eine lineare Bewegung mittels einer Mechanik umgesetzt werden.

Weiter kann das am Griffkörper 22 angeordnete Einstellelement 72 mit einer dünnen Membrane aus einer Weichkomponente überspannt sein, wodurch eine Dichtheit im Bereich des Einstellelements 72 gewährleistet wird.

In Fig. 17 ist eine Ausführungsform eines Potentiometers 42 mit einem linear verschiebbaren Abgriff 96 gezeigt. Auf einem Träger 90 ist eine leitende, einen verschwindend kleinen Widerstand aufweisende Leiterbahn 104 und eine als Widerstandsbahn wirkende Leiterbahn 92 aufgebracht. Die beiden Leiterbahnen sind durch den linear verschiebbaren, leitenden Abgriff 96 miteinander verbunden. Durch das lineare Verschieben des Abgriffes 96 wird der Widerstand des Potentiometers 42 verändert. Analog zu dem in Fig. 13 gezeigten Potentiometer 42 weist dieses Potentiometer 42 ebenfalls einen nichtleitenden Endbereich 98 auf, wodurch ebenfalls ein Ein-/Ausschalter ausgebildet ist. Ein weiteres Potentiometer 42 ist in Fig. 18 gezeigt. Dieses ist analog zu dem in Fig. 12 gezeigten Potentiometer 42 jedoch ohne Ein-/Ausschalter ausgebildet.

In Fig. 19 und in Fig. 20 sind weitere Potentiometer 42 mit linear verschiebbaren Abgriffen abgebildet. Diese zeichnen sich dadurch aus, dass beide Leiterbahnen 92 als Widerstandsbahnen ausgebildet sind. Dadurch kann die entstehende Wärme besser abgeführt werden. Das in Fig. 20 gezeigte Potentiometer 42 weist, im Gegensatz zu dem in Fig. 19 gezeigten Potentiometer 42, einen Ein-/Ausschalter auf, der durch ein nichtleitendes Band 98 ausgebildet ist, auf welches der Abgriff 96 linear aufschiebbar ist.

Die verschiedenen Aufbaumöglichkeiten der linearen Potentiometer 42 sind gleich wie jene der Potentiometer 42 mit Drehverstellung. Der Unterschied besteht in der Anordnung, linear oder eben rotativ.

Die Bewegungsrichtung des Einstellelements 72 bei einem linearen Potentiometer 42 als Steuerelement ist vorzugsweise parallel zur Längsachse des Produkts, wobei ein Einsatz quer zur Längsachse nicht ausgeschlossen wird. Die Intensität wird vorzugsweise in Richtung des Verbrauchers 33 gesteigert und in Gegenrichtung vermindert.

Eine weitere Ausführungsform des Körperpflegegerätes, insbesondere der Zahnbürste 12 kann mehrere, beispielsweise zwei elektrische Verbraucher 33 aufweisen. Ein weiterer Verbraucher 33 kann ein weiterer Motor, eine Wärmequelle, eine Fluidpumpe zum Zuführen von Zahnpasta zum Kopfbereich 14 u.s.w. sein. Im Fall, dass die beiden elektrischen Verbraucher 33 zeitlich nacheinander zur Anwendung gelangen, kann das Potentiometer 42 wie in Fig. 16 gezeigt ausgebildet sein. Dieses Potentiometer 42 weist einen zweigeteilten Teilkreisbogen 92, 92' auf mit je einem ersten Kontakt 94, 94'. Jeder dieser Kontakte 94, 94' ist mit einem der beiden elektrischen Verbraucher 33 elektrisch verbunden, sodass jeweils der eine oder der andere mit Strom versorgt werden kann. Für jeden der beiden Verbraucher 33 steht ein Teilkreisbogen, welcher winkelmässig vorzugsweise kleiner ist als jener für nur eine Anwendung in einem Potentiometer 42, für die Regulierung zur Verfügung. Die beiden Teilkreisbogen können so ausgelegt sein, dass jeder seinen eigenen, für die Anwendung spezifischen Widerstandsbereich hat. Ein Ein-/Ausschalter ist durch einen nichtleitenden Abschnitt zwischen den beiden Teilkreisbogen 92, 92' ausgebildet.

Die zwei separat ansteuerbaren Verbraucher 33 können auch Leuchtdioden (Light Emitting Diode, LED) sein, die jeweils in einem Bereich reguliert werden können. Durch die variable Versorgung können verschiedene Farben und / oder Intensitäten erzeugt werden.

In einer weiteren Ausführungsform können ebenfalls zwei elektrische Verbraucher 33 vorgesehen sein. Jeder dieser Verbraucher 33 ist mit einem separaten Potentiometer 42 verbunden. Diese können in einem gemeinsamen Gehäuse untergebracht sein. Jedes dieser Potentiometer 42 ist über ein eigenes Einstellelement 72 einstellbar, wobei auch diese getrennt voneinander oder direkt aneinander anliegend ausgebildet sein können. Mittels einer solchen Ausführungsform können beispielsweise zwei Elektromotoren gesteuert werden, wobei der eine Rotationsbewegung eines Borstenträgers 118 bewirkt und der andere Elektromotor eine Vibration des Borstenträgers bewirkt. Durch die individuelle Ansteuerbarkeit der beiden Elektromotoren kann die Reinigungsleistung der Zahnbürste 12 optimiert werden.

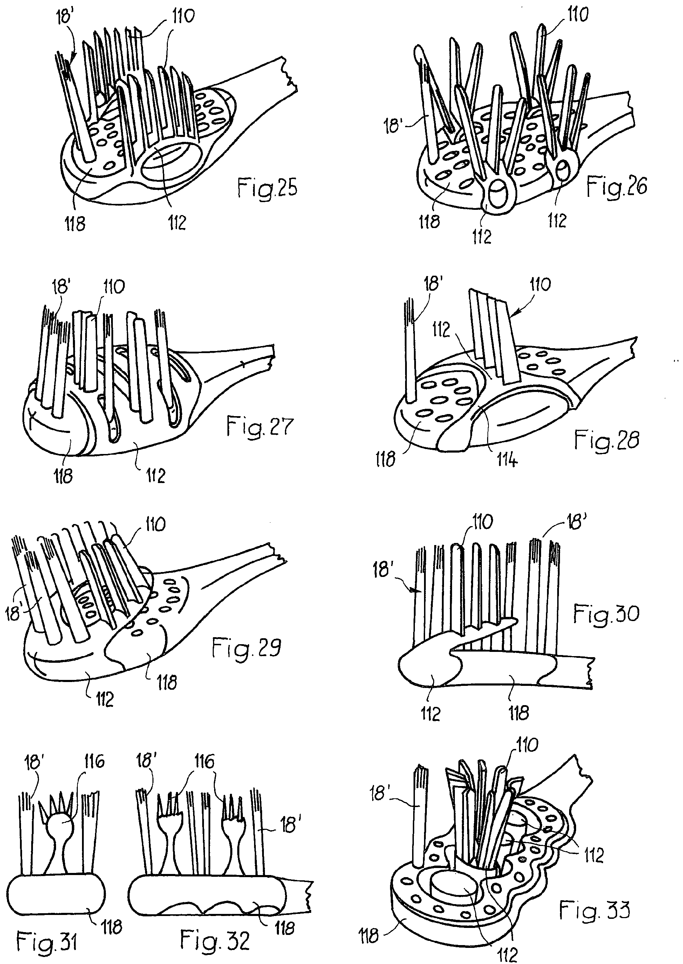

Alternativ zu dem in Fig. 1 gezeigten Borstenbesatz 18 kann der Behandlungsbereich 15 der Zahnbürste 12 einen anders ausgeformten Borstenbesatz mit zusätzlichen gummielastischen Elementen 110 zur Massage und/oder zum Reinigen aufweisen. Derartige Behandlungsbereiche sind in den Fig. 25 bis Fig. 33 gezeigt. In den Figuren sind zur besseren Übersichtlichkeit teilweise nicht alle Borstenbündel 18' aus konventionellen Borsten z.B. aus Polyamid PA oder Polyester PBT des Borstenbesatzes 18 (siehe Fig. 1), sondern nur deren Aufnahmelöcher in der Hartkomponente, beziehungsweise gummielastischen Elementen 110 gezeigt. Die konventionellen Borsten haben üblicherweise Durchmesser kleiner 0.25 mm. Die gummielastischen Reinigungselemente haben üblicherweise deutlich grössere Querschnitte.

Der in Fig. 25 dargestellte Behandlungsbereich weist mehrere gummielastische Elemente 110 beidseitig, bezüglich der Längsachse der Zahnbürste 12, seitlich des Borstenbesatzes 18 auf. Die gummielastischen Elemente 110 sind an einem federnden, oval ausgebildeten Weichkunststoffring 112 angeformt, welcher seinerseits mit dem aus einer Hartkomponente gefertigten Borstenträger 118 verbunden ist, insbesondere angespritzt ist. Die gummielastischen Elemente 110 sind zumindest annähernd parallel zu den Borstenbündeln 18' angeordnet. Durch das Anspritzen der gummielastischen Elemente 110 an den Weichkunststoffringen 112 und die dadurch erreichte weiche Lagerung, sprechen diese besonders gut auf die Vibration an. Die somit weich gelagerten gummielastischen Reinigungselemente 110 erreichen eine grössere Auslenkung als die konventionellen Borsten 18.

Der in Fig. 26 dargestellte Behandlungsbereich weist vier Weichkunststoffringe 112 auf, an welchen je drei gummielastische Elemente 110 angeformt sind. Je zwei Weichkunststoffringe 112 sind auf derselben Seite des Borstenbesatzes angeordnet. Die Weichkunststoffringe 112 mitsamt der gummielastischen Elemente 110 werden bevorzugt direkt an die Hartkomponente des Borstenträgers 118 angespritzt. Die gummielastischen Elemente 110 können dieselbe Richtung wie die Borsten haben oder sie können in einem Winkel zwischen 0 und 45 Grad zu ihnen stehen, wobei sie in diesem Fall vorzugsweise radial vom Mittelpunkt des Kunststoffrings abgehen.

Die in Fig. 25 und 26 dargestellten Weichkunststoffringe müssen nicht zwingend kreisrunde Ringe sein. Die Ausgestaltung der "Ringe" als oval oder als sonstige geschlossene Kurven ist nicht ausgeschlossen. Die Formung der Weichkunststoffringe passiert vorzugsweise während dem Spritzgiessprozess im Spritzgusswerkzeug mittels Seitenschiebern. Die Ringe 112 und die Reinigungselemente 110 können auch aus unterschiedlichen Materialien bestehen, z.B. aus Weichkomponenten unterschiedlicher Shore A Härte. Dabei werden die Reinigungselemente 110 vorzugsweise aus weicheren Materialien als die Ringe gefertigt.

Der in Fig. 27 dargestellte Behandlungsbereich weist eine Weichkunststoffbrücke 112 auf, welche den Borstenträger 118 quer zur Längsrichtung der Zahnbürste 12 überspannt. Die Weichkunststoffbrücke 112 weist Ausnehmungen auf, durch welche die im Borstenträger 118 verankerten Borsten 18' hindurch geführt sind. An der Weichkunststoffbrücke 112 sind mehrere gummielastische Elemente 110 angeformt. Die Weichkunststoffbrücke kann seitlich des Zahnbürstenkopfs angespritzt sein oder sie kann auf der dem Borstenfeld entgegengesetzten Seite des Bürstenkopfs angespritzt sein.

In Fig. 28 ist wiederum eine Weichkunststoffbrücke 112 gezeigt. Die parallel zu den Borstenbündeln 18' ausgerichteten gummielastischen Elemente 110 sind an einem Mittelstück angeformt, von welchem vier Arme 114 abstehen, welche den Borstenträger 118 mindestens teilweise umgreifen und an diesem seitlich oder an der Unterseite angespritzt sind.

In den Fig. 25 bis 30 können die Brücken oder Ringförmigen federnden Strukturen Ausnehmungen aufweisen durch welche konventionelle Borsten hindurchführen. Zudem können alle Strukturen Reinigungselemente 110 aus Weichkomponente enthalten, welche direkt an die Brücken oder Ringförmigen Strukturen angespritzt sind. Die maximale Distanz zwischen der Unterseite dieser federnden Strukturen und der Bürstenkopfoberseite beträgt weniger als 8 mm vorzugsweise weniger als 5 mm.

In Fig. 29 und Fig. 30 ist ein Behandlungsbereich gezeigt, dessen gummielastische Elemente 110 an einer Weichkunststoffwippe 112 angeordnet sind. Diese ist in Längsrichtung der Zahnbürste 12 am freien Ende des Borstenträgers 118 angeformt, insbesondere angespritzt. Der freie Abschnitt der Weichkunststoffwippe 112, an welchem die gummielastischen Elemente 110 angeformt sind, ist ringförmig ausgebildet. Einzelne Borstenbündel 18' durchgreifen die Weichkunststoffwippe 112 im Loch des Rings und nahe ihrem Verbindungsbereich mit dem Borstenträger 112. Die Weichkunststoffwippe kann in gewissen Bereichen auch durch Säulen abgestützt sein (nicht gezeigt).

In Fig. 31 und Fig. 32 ist eine weitere Ausführungsform des Behandlungsbereichs mit gummielastischen Elementen 110 gezeigt. Die gummielastischen Elemente 110 sind am direkt an der Bürstenkopfvorderseite befestigt, beziehungsweise angespritzt. Die Elemente 110 weisen an ihrem feien Ende eine kugelartige Verdickung 116 auf, von welcher feinere Massage- und Reinigungselemente wegstehen.

In Fig. 33 ist ein weiteres Ausführungsbeispiel eines Behandlungsbereichs gezeigt. Ein Borstenträger 118 ist aus einer schalenartig geformten Hartkomponente gebildet, die einen Boden und davon abstehend einen Randbereich aufweist. Die konventionellen Borstenbündel 18' des Borstenbesatzes 18 sind im Randbereich des Borstenträgers 118 in der Hartkomponente verankert. Auf den Boden sind mehrere Inseln 112 aus Weichmaterial aufgebracht beziehungsweise angespritzt, von welchen die gummielastischen Elemente 110 abstehen. Die Ausrichtungen der Borstenbündel 18' und der gummielastischen Elemente 110 sind zumindest einigermassen gleich.

Die unterschiedliche Besetzung des Kopfbereichs 14 mit Elementen aus Borsten und sonstigen weichelastischen Massage- und/oder Reinigungselementen hat zur Folge, dass Elemente mit verschiedenen Eigenfrequenzen im Bürstenkopf angeordnet sind. Hierbei schwingen die konventionellen Borsten weniger als die weichelastischen Elemente 110, wobei versucht wird mittels Regulierung der Motorengeschwindigkeit, die weichelastischen Elemente 110 in Eigenfrequenz zu bringen. Wiederum andere Effekte können erreicht werden, wenn die Borsten mittels des AFT-(Anchor-Free-Tufting)oder IMT- (Inmould-Tufting) Verfahrens am Kopfbereich 14 angebracht sind.

In Fig. 2 ist ein als Nassrasierer 120 ausgebildetes Körperpflegegerät 10 gezeigt. Die Endkappe 26 dieses Rasierers 120 ist weitgehend, bis auf die äussere Gestaltung und die Dimensionen, gleich der im Zusammenhang mit Fig. 1 offenbarten Endkappe 26 ausgebildet. Der Griffkörper 22 des Rasierers 120 ist ebenfalls weitgehend gleich dem Griffkörper 22 der im Zusammenhang mit Fig. 1 offenbarten Zahnbürste 12 ausgestaltet. Der Rasierer 120 weist einen Ein-/Ausschalter 35 auf, der analog zu jenem der Zahnbürste 12 gestaltet ist. Anschliessend an den Griffkörper 22 und gegenüberliegend der Endkappe 26 ist ein Halsbereich 20 des Rasierers 120 angeformt. Der freie Endbereich des Halsbereichs 20 ist mit einem Wechselklingenhalter versehen, der durch Betätigung eines Austauschknopfes 122 eine im Behandlungsbereich 15 gehaltene Klinge freigibt. Für Aufbau, Funktionsweise, Herstellung und verwendete Materialen der Endkappe 26 wird auf die obige, die Zahnbürste 12 betreffende Figurenbeschreibung verwiesen. Im Halsbereich 20 ist ein einen elektrischen Verbraucher 33 bildender Motor angeordnet, welcher dazu bestimmt ist, den Behandlungsbereich in Vibration zu versetzten. Die bestehende Endkappe des Rasierers, offenbart in EP-A-1 563 967 kann direkt gegen die in dieser Schrift offenbarte Endkappe 26 mit Steuerelement ausgetauscht werden, ohne dass am Produkt, dem Rasierer, Anpassungen nötig sind.

Für den Nassrasierer 120 mit einem elektrisch betriebenen Funktionselement können dem Funktionselement die analogen Funktionen wie für die Zahnbürste 12 zugeordnet werden. So können beispielsweise Lichtquellen, Fluidpumpen, Wärmequellen, elektrische und magnetische Felder oder andere elektrische Verbraucher, wie beispielsweise ein Langhaarschneider, mit dem vorliegenden elektrischen Kreis in der Endkappe 26' gesteuert werden.

Für den Aufbau, Funktionsweise, Zusammensetzung der Materialien und Herstellungsverfahren der weiteren Elemente, insbesondere des Griffkörpers 22, des Halsbereichs 20 und des Wechselklingenhalters wird auf die EP-A-1 563 967 verwiesen. Diese Anmeldung offenbart zum einen, einen elektrisch betriebenen Rasierer, der mit einem Akku betrieben wird, und zum andern ein elektrisch betriebener Rasierer, der mit einer Batterie betrieben wird. Die in EP-A-1 563 967 offenbarte Endkappe kann durch die erfindungsgemässe Endkappe 26 ausgewechselt werden.

Selbstverständlich kann das Einstellelement 72, wie im Zusammenhang mit der Zahnbürste 12 beschrieben, auch am Griffkörper 22 angeordnet und linear verschiebbar oder drehbar ausgebildet sein. Weitere Ausführungsformen der Zahnbürste 12 können weitgehend analog auf den Rasierer 120 übertragen werden.

Im Folgenden soll noch die Umsetzung einiger weiterer möglicher Ausführungsformen von Verbrauchern 33 in einem Nassrasierer beispielhaft erwähnt werden. Wie der im Folgenden beschriebene Mascara-Farbapplikatoren können beispielsweise auch Heizelemente 140 zur Erzeugung von Wärme in einer Wechselklinge 142 des Rasierers 120 eingebaut werden. Diese können in der Form eines Widerstandsdrahtes oder einer Widerstandsheizung oder kleinen flachen Widerständen, zum Beispiel SMD-Widerständen (Surface Mounted Device Widerständen) oder Chip-Wiederständen, realisiert werden. Diese können entweder über eine Steuerung reguliert oder als selbstregulierende Widerstände ausgelegt werden. Die Heizelemente 140 können unter den Klingen 142, bzw. vor dem Eingriff der Klingen 142 angeordnet sein, um die Haare kurz aufzuwärmen und/oder nach dem Schnitt, bzw. oberhalb der Klingen um die Haut nach dem Schnitt zu pflegen.

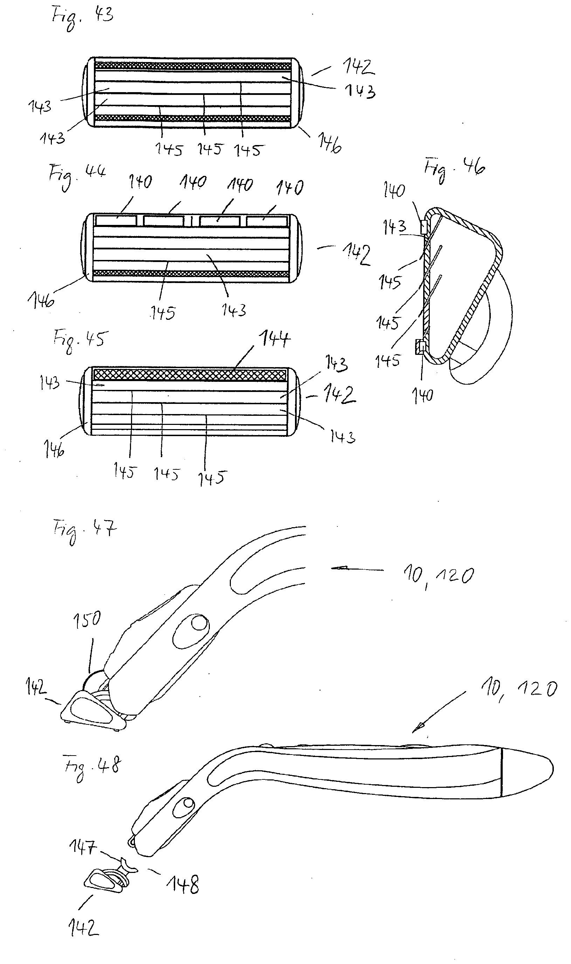

In den Figuren 43 bis 45 sind verschiedene Klingeneinheiten dargestellt. Fig. 43 zeigt beispielhaft eine Standard-Wechselklinge 142. Die Figuren 44 und 45 zeigen oberhalb von Klingenmessern 143 angebrachte Heizelemente 140 bzw. Heizstreifen 144. Die Heizelemente 140 sollten in der Seitenansicht auf gleicher Höhe oder leicht unterhalb von Schnittkanten 145 der Klingenmesser 143 angeordnet sein. Um die Heizelemente 140 auf der Wechselklinge 142 zu verankern, können diese auf einer Hartkunststoffkomponente eines Wechselklingenrahmens 146 montiert sein und mittels Spritzguss mit einer weiteren Kunststoffkomponente überspritzt werden. Beispielsweise könnte eine Weichkunststoffkomponente zum Überspritzen eingesetzt werden, insbesondere wenn das Heizelement 140, wie in Fig. 46 gezeigt, unterhalb der Schnittkante 145 der Klingenmesser 143 und damit vor dem Klingeneingriff, d.h. in bestimmungsgemässer Bewegungsrichtung der Wechselklinge 142 vor den Schnittkanten 145 der Klingenmesser 143, angeordnet ist. Die Kunststoffkomponente welche für die Überspritzung verwendet wird, kann auch mit einer Wirksubstanz versehen sein oder derart beschaffen sein, dass sie sich während dem Gebrauch abnutzt. Die Wirksubstanz ist beispielsweise ein wasserlösiches spritzgussfähiges Polymer, beispielsweise auf Basis von Polyethylenoxid (Polyox) oder PEG (Polyethylenglycol). Wird das Heizelement 140 nach dem Klingeneingriff angeordnet, kann das Heizelement 140 mit hautpflegenden Mitteln umgeben, bzw. überdeckt werden, welche beispielsweise, wie bereits beschrieben, direkt im Kunststoff integriert sind. Diese hautpflegenden Mittel lösen sich dann je nach eingestellter Temperatur schneller oder langsamer auf, d.h. die Wechselklinge 142 gibt dann mehr oder weniger Mittel an die Haut ab. Insbesondere können die hautpflegenden Mittel in wasserlösliche, thermoplastische Kunststoffe, welche mittels Spritzguss verarbeitet werden können, eingebracht sein, mit denen die Heizelemente 140 umspritzt werden. Alternativ können auch Fette, Öle, Wachse oder andere schmierende bzw. die Gleiteigenschaften verbessernde Mittel abgegeben werden. Mittels der vorgeschlagenen Wärmeenergie lösen auch diese sich besser auf und durch die individuelle Justierung des Einstellelementes 72 kann die Abgabe den Bedürfnissen entsprechend vorgesehen werden. Zudem sei erwähnt, dass bei Zahnbürsten 12, Wechselklingen 142 und Mascarabürsten 130 etc. das Heizelement 140 zur Erzeugung von Wärme nicht nur aus einem Heizdraht / Widerstandsdraht oder einem Widerstandselement bestehen kann, sondern auch aus elektrisch leitendem Kunststoff, welcher mittels Spritzguss auf die gewünschten Stellen aufgebracht wurde. Der leitende Kunststoff wird dann analog zu Widerstandsdrähten mit den zugeordneten Anschlüssen elektrisch verbunden und wärmt sich im vom elektrischen Strom durchflossenen Zustand entsprechend auf.

Zur Herstellung von Bereichen mit elektrisch leitendem Kunststoff können sowohl Ein- wie auch Mehrkomponenten-Spritzgiessverfahren verwendet werden, um gleichzeitig auch weitere Teile des Applikationskopfes (Bürstenkopf, Maskarabürstenkopf, Wechselklinge, etc.) aus Kunststoff herzustellen. Vorzugsweise verbindet sich der elektrisch leitende Kunststoff mit einem Kunststoff der Umgebung oder es wird eine Verbindung mittels Formschluss gegenüber den anderen Kunststoffen erzeugt. Der elektrische Kunststoff ist mindestens teilweise von nicht leitenden Teilen, beispielsweise aus nicht leitendem Kunststoff, umgeben.

Selbstverständlich muss die Wechselklinge 142 mit elektrischer Energie versorgt werden können. Hier besteht die Möglichkeit bewegliche Kontakte 147 mittels Berührung (Schleifkontakte) zwischen der Wechselklinge 142 und dem Nassrasierergriff einzusetzen oder diese in eine Wechselkupplung 148 zu integrieren, wie in Fig. 48 dargestellt. In beiden Fällen können zur Leitung des elektrischen Stroms anstatt von elektrisch leitenden Drähten auch elektrisch leitende Kunststoffe eingesetzt werden. Aufgrund von Wasser und Rasierschaum können diese Kontakte leicht verschmutzen oder sind korrosionsanfällig. Bevorzugt ist jedoch eine Energieübertragung mittels Steckverbindung und flexiblen Leiterbahnen oder Kabel, wie beispielsweise in Fig. 47 dargestellt. Bei dieser Art Energieübertragung sind die Kontakte fixiert, d.h. wenn die Wechselklinge 142 ihre Lage verändert, verändern sich die Positionen der Kontakte relativ zueinander nicht. Es ist auch möglich, dass die flexiblen Leiterbahnen oder Kabel die Wechselklinge 142 zusätzlich flexibel federn. Diese Art Energieübertragung ist auch für andere Verbraucher 33 in der Wechselklinge anwendbar. Die beschriebene Steckverbindung kann auf der Ober- oder der Unterseite des Rasierers 120 realisiert werden.

Als weiteres Beispiel kann in der Nassrasierer-Wechselklinge 142 eine Lichtquelle, beispielsweise mittels einer LED / OLED oder einer Leuchtfolie/ Elektrolumineszenz-Folie (EL-Folie) untergebracht sein. Vorzugsweise werden aus Kostengründen die teueren elektrischen Komponenten dabei im Griffkörper 22 untergebracht und nur die minimal benötigten Komponenten in der Wechselklinge 142. Beim Einsatz einer LED wird somit die LED vorzugsweise im Handgriff eingesetzt und zur Wechselklinge 142 eine Lichtkupplung mittels lichtleitender Materialien, wie beispielsweise transparenten Kunststoffen, lichtleitenden Glasfasern, etc. aufgebaut, um das Licht an den vorgesehenen Ort auf die Wechselklinge 142 zu leiten. Die Anwendung eines Lichtleiters für die Übertragung des Lichts in die Wechselklinge 142 kann analog der elektrischen Übertragung in Fig. 47 erfolgen. Falls das Licht auf der Wechselklinge 142 mittels einer Leuchtfolie erzeugt werden soll, wird die Energie wieder mittels elektrischen Stroms gemäss dem vorher besprochenen Beispiel der Heizelemente 140 zur Wechselklinge 142 übertragen. Bei der Leuchtfolie sind die teueren elektrischen Komponenten zur Speisung der Leuchtfolie ebenfalls im Handgriff des Nassrasierers 120 untergebracht. Analog zu den Heizelementen 140 können die leuchtenden Mittel wieder auf einem Streifen unterhalb des untersten Klingenmesser 143 vor dem Klingeneingriff, d.h. in bestimmungsgemässer Bewegungsrichtung der Wechselklinge 142 vor den Schnittkanten 145 der Klingenmesser 143, oder auf einem Streifen oberhalb des obersten Klingenmessers 143 also nach dem Klingeneingriff, d.h. in bestimmungsgemässer Bewegungsrichtung der Wechselklinge 142 nach den Schnittkanten 145 der Klingenmesser 143, platziert werden. Die Lichtemission an der Wechselklinge kann beispielsweise eine antibakterielle Funktion mittels blauem Licht übernehmen oder eine Reaktion beim eingesetzten Rasierschaum auslösen. Die Stromleitung für die Leuchtmittel, insbesondere bei kleineren Strömen, kann wiederum über bereits oben erwähnte elektrisch leitende Kunststoffe erfolgen.

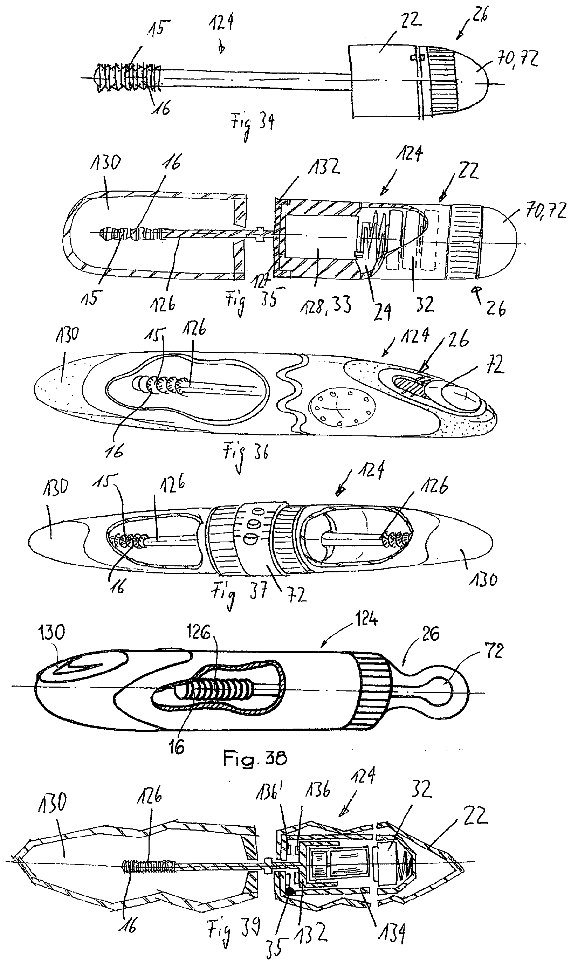

In den Fig. 34 - Fig. 39 sind weitere erfindungsgemässe, elektrisch betriebene Körperpflegegeräte 10, welche als Mascara-Farbapplikatoren 124 ausgebildet sind, offenbart. Hierbei handelt es sich nur um die Applikationsgeräte, jedoch nicht um das Mascara, die Farbe, welche vorzugsweise konventionell, wie auf dem Markt bekannt ausgestaltet ist.

Fig. 34 und 35 zeigen zwei Ausführungsformen eines Mascara-Farbapplikators 124. Der Mascara-Farbapplikator 124 weist in diesem Ausgestaltungsbeispiel einen kreiszylindrischen Griffkörper 22 mit einer einerseits daran angeordneten Endkappe 26 sowie einer andererseits daran angeordneten Mascarabürste 126 auf, welche das Pflegeelement 16 des Mascara-Farbapplikators bildet. Weiter weist der Griffkörper 22 einen Innenraum 24 (siehe Fig. 35) auf, welcher durch die Endkappe 26 verschlossen ist. Die Endkappe 26 mit dem von Hand betätigbaren Einstellenelement 72, mittels welchem sich das in der Endkappe 26 enthaltene Steuerelement betätigen lässt, ist weitgehend gleich wie die Endkappe 26 der Zahnbürste 12 (siehe Fig. 1 sowie Fig. 3 bis 11) ausgebildet. Für die Zusammensetzung, Ausgestaltung und die verwendeten Materialen wird auf die obige Beschreibung im Zusammenhang mit der Zahnbürste 12 verwiesen. Die erfindungsgemässe Endkappe beziehungsweise das erfindungsgemässe Steuerelement kann sowohl bei vibrierender Anwendung als auch bei allen anderen weiter unten diskutierten elektrischen Anwendungen einer Mascarabürste verwendet werden.

Anstelle des im Zusammenhang mit der Zahnbürste 12 offenbarten Bajonettverschlusses kann eine Rastverbindung zwischen der Endkappe 26 und dem Griffkörper 22 zur Anwendung kommen. Diese Rastverbindung ist analog zur Rastverbindung zwischen dem Schalenteil 56 (siehe Fig. 6) und dem Kernteil 54 ausgebildet.

Ein in Fig. 35 gezeigter, als Vibrationselement (Motor mit Unwucht - in Fig. 39 gezeigt) 128 ausgebildeter elektrischer Verbraucher 33 ist in den Innenraum 24 eingesetzt und liegt fest an einer den Innenraum 24 begrenzenden Stirnwand 127 an, die der Endkappe 26 gegenüber liegt. Gegenüberliegend des Vibrationselements 128 ist an der Stirnwand 127 ein Bürstenhalter 132 angeordnet, welcher integral mit der Mascarabürste 126 gefertigt ist. Die Mascarabürste 126, welche an ihrem freien Endbereich den Behandlungsbereich 15 aufweist, ist folglich mit dem Vibrationselement 128 gekoppelt, sodass die Vibrationen auf den Behandlungsbereich 15 übertragen werden.

Weiter ist im Innenraum 24 ein Energiespeicher 32 angeordnet, welcher über das in der Endkappe 26 angeordnete elektrische Steuerelement mit dem Vibrationselement 128 elektrisch verbunden ist. Folglich kann über das in der Endkappe 26 angeordnete Einstellelement die Stärke der Vibration stufenlos eingestellt werden, wodurch das Auftragen von Mascara (Wimperntusche) auf die Augenwimpern verbessert wird, da die Augenwimpern durch die Vibration der Mascarabürste voneinander separiert werden. Die Vibrationen ermöglichen auch einen gleichmässigen Farbauftrag.

Die Frequenz der Vibration liegt unter 300 Hz, vorzugsweise unter 200 Hz bei einer nur geringen Auslenkung von bevorzugt unter 1 mm im freien Endbereich des Behandlungsbereichs 15 bei normalem Halten in der Hand. Bei zu starken Vibrationen können Farbspritzer entstehen oder einzelne Wimpern können zusammenkleben.

In der Endkappe 26 gelangt ein als Potentiometer 42 ausgebildetes Steuerelement mit Ein-/Ausschalter zur Anwendung, welches bevorzugt die "Aus"-Stellung nachfolgend zum grössten Widerstandsbereich (siehe Fig. 14) aufweist. Alternativ kann ein Mikroschalter (mit fixierter ein/aus Position) mit einer Grundfläche kleiner 8mm mal 8mm verwendet werden. Eine anderer Ausgestaltungsvariante sieht vor, dass der Schalter bei der Entnahme des Mascarabehälters 130 aktiviert wird. Damit wird gewährleistet, dass das Gerät nur bei freiliegender Mascarabürste funktioniert. Umgekehrt ist es sinnvoll, dass der Stromfluss beim aufsetzen des Mascarabehälters zwangsweise deaktiviert wird.

Als Vibrationselement 128 wird bevorzugt ein Elektromotor mit einer Leistungsaufnahme von weniger als 0.5 Watt verwendet. Eine durch das Vibrationselement 128 erzeugte Vibrationskraft liegt vorzugsweise unterhalb 1.3 G, insbesondere unter 1 G, wobei G die Gravitationskraft bezeichnet. Bei grösseren Vibrationskräften könnten Mascaratropfen von der Mascarabürste wegspritzen. Um diese Vibrationskraft zu erzeugen, weist ein Exzenter des Vibrationsmotors vorzugsweise eine Länge unter 5 mm und ein Gewicht von unter 1,5 g, vorzugsweise von unter 1 g auf. Das Gewicht bezieht sich auf den Volumenanteil des Exzenters, welcher eine exzentrische Wirkung erzeugt. Weiter ist der Kontakt zwischen dem elektrischen Verbraucher 33 und dem Energiespeicher 32 über eine Feder hergestellt, wodurch ein guter Kontakt sichergestellt ist. Das Schaltbild der im Griffkörper 22 und der Endkappe 26 enthaltenen elektrischen Schaltung ist in Fig. 20 gezeigt und entspricht jener der Zahnbürste 12.

Der Mascara-Applikator 124 hat vom freien Ende der Mascarabürste 126 bis zum freien Ende der Endkappe 26 eine Länge von vorzugsweise 70 mm bis 150 mm, vorzugsweise zwischen 85 mm bis 135 mm. Die Länge des Griffkörpers 22 mit der daran angeordneten Endkappe 26 liegt bevorzugt zwischen 20 mm und 70 mm, vorzugsweise zwischen 35 mm und 55 mm. Die Länge der Mascarabürste 126 liegt bevorzugt zwischen 30 mm und 100 mm, vorzugsweise zwischen 40 mm und 85 mm, wovon der eigentliche Bürstenteil im Bereich zwischen 10 mm bis 40 mm, vorzugsweise 20 mm bis 30 mm liegt. Der im Griffkörper 22 eingebaute Energiespeicher 32 hat vorzugsweise ein Gewicht von unter 15 g und eine Länge von unter 50 mm. Durch diese Masse wird die Ergonomie und das genaue Führen der Macarabürste nicht negativ beeinflusst. Es bietet sich aus diesem Grund an, eine Batterie des Typs AAA, mit 1,5 V oder - wie in Fig. 35 gezeigt - mehrere Knopfzellen zu verwenden, was bevorzugt wird.

Wie in Fig. 35 gezeigt, ist die Mascarabürste 126 in einen Mascarabehälter 130 einführbar. Die Mascarabürste 126 ist in den Mascarabehälter 130 durch eine runde Öffnung eingeführt. Die Mascarabürste 126 weist nahe dem Griffkörper 22 eine Verdickung auf, welche mit der Öffnung im Mascarabehälter 130 zusammenwirkt, um im komplett in den Mascarabehälter 130 eingeführten Zustand der Mascarabürste 126 den Mascarabehälter 130 gegen Auslaufen der Mascara zu schützen.

In Fig. 36 ist eine alternative Ausgestaltung des Mascara-Applikators 124 gezeigt, welcher ein linear verschiebbares Einstellelement 72 aufweist. Folglich gelangt bevorzugt auch ein Potentiometer 42 mit einem linear verschiebbaren Abgriff 96 zur Anwendung, beispielsweise eines gemäss Fig. 17 oder Fig. 20.

In Fig. 37 ist ein Mascara-Farbapplikator 124 mit zwei voneinander getrennten, mit Mascara gefüllten Mascarabehältern 130 gezeigt. Der zwischen den beiden Mascarabürsten 126 angeordnete Griffkörper 22 dient einerseits der Befestigung der Mascarabehälter 130 bei Nichtgebrauch und andererseits sind im Griffkörper 22 der Energiespeicher, der Verbraucher und das Steuerelement der elektrischen Applikation untergebracht. Der Verbraucher ist als Vibrationselement ausgebildet und kann durch die Anordnung zwischen den beiden Mascarabürsten 126 für beide Mascarabürsten 126 zur Erzeugung von Vibrationen genutzt werden. Die Steuerung der Applikation passiert mit dem Einstellelement 72, welches auf der Griffoberfläche durch einen umlaufenden Ring realisiert ist. Durch das Drehen des Rings beziehungsweise des Einstellelements 72 kann die Steuerung der Applikation vorgenommen werden, welche neben dem individuellen Variieren der Stärke der Vibration auch das Ein- und Ausschalten der Applikation erlaubt. Alternativ kann auch bei dieser Variante ein separater Schalter eingesetzt werden - entweder manuell betätigt, oder über die Entfernung beziehungsweise Anbringen des Mascarabehälters 126 zwangsgesteuert. Die Anordnung eines Rings auf dem Griffkörper als Einstellelement kann auch bei den anderen erfindungsgemässen Körperpflegeprodukten vorgesehen werden. Vorzugsweise wird der Ring ebenfalls gegen innen abgedichtet, damit Wasser nicht ins Gerät eindringen kann.

In Fig. 38 ist eine weitere Ausführungsform eines Mascara-Farbapplikators 124 gezeigt. Die Endkappe 26 dieses Applikators 124 ist mit einem linear, in Axialrichtung der Mascarabürste 126 verschiebbaren Einstellelement 72 versehen. Dieses ist stabförmig ausgebildet und mechanisch mit dem Steuerelement verbunden. Der freie Endbereich weist eine kugelartige Verdickung auf. Vorzugsweise wird als Steuerelement ein Potentiometer 42 mit einem linear verschiebbaren Abgriff 96, wie in Fig. 17 bis Fig. 20 gezeigt, angewandt. Das Einstellelement 72 ist mit einem streckbaren Weich-Kunststoff überzogen, der im Bereich der Bewegung des Einstellelements 72 elastisch verformbar ist.

In Fig. 39 ist eine weitere Ausführungsform des Griffkörpers 22 gezeigt. In einem Innenraum 24 des Griffkörpers 22 ist ein becherförmiger Bürstenhalter 132 angeordnet von dessen Becherboden, auf der gegenüberliegenden Seite der Becheröffnung, die Mascarabürste 126 rechtwinklig zum Boden wegsteht. In den Becher ist ein Vibrationselement 128 eingepresst, welches einen Elektromotor und einen Exzenter aufweist. Das Vibrationselement 128 wurde im Zusammenhang mit Fig. 35 bereits beschrieben.

Der Mascarabürstenhalter 132 mit dem Vibrationselement 128 ist in einem im wesentlichen zylinderförmigen Gehäuse 134 angeordnet und gegenüber diesem in Richtung der Längsachse der Mascarabürste 126 verschiebbar. Ebenfalls innerhalb des Gehäuses 134 ist der Energiespeicher 32 angeordnet, welcher mittels einer Feder in Anlage an das Vibrationselements 128 gebracht ist.

Weiter sind am Bürstenhalter 132 auf der Seite der Mascarabürste 126 Kontaktelemente 136 und am Gehäuse 134 mit den Kontaktelementen 136 zusammenwirkende Gegenkontaktelemente 136' ausgebildet. Die Kontaktelemente 136 bilden zusammen mit den Gegenkontaktelementen 136' einen elektrischen Schalter 35. Der Schalter 35 wird dadurch geschlossen, dass durch Verschieben des Bürstenhalters 132 gegenüber dem Gehäuse 134 der Kontakt beim Herausziehen der Mascarabürste 126 aus dem Mascarabehälter 130 geschlossen wird. Dabei wird die Bürste durch Reibung gegenüber dem Griffkörper 22 und dem Gehäuse 134 verschoben, wodurch die Kontaktelemente 136 elektrisch leitend in Anlage an die Gegenkontaktelemente 136' gebracht werden. Sobald die Mascarabürste 126 wieder in den Mascarabehälter 132 eingeführt wird, wird durch mechanische Reibung der Bürstenhalter 132 in entgegengesetzter Richtung verschoben, wodurch der elektrische Kontakt zwischen den Kontaktelementen 136 und den Gegenkontaktelementen 136' geöffnet und dadurch ebenfalls der Schalter 35 geöffnet wird. Weiter, jedoch in Fig. 35 nicht gezeigt, kann in den elektrischen Kreis ein von aussen einstellbares, elektrisches Steuerelement zu kontinuierlicher Veränderung des Energieflusses zwischen dem Energiespeicher und dem Vibrationselement eingefügt sein. Eine derartige Schaltung ist im Zusammenhang mit der Zahnbürste in Fig. 21 gezeigt und bei den vorgängigen Erklärungen zu den Mascaraapplikatoren erklärt.

Wie bei der vibrierenden Zahnbürste 12 wird vorgeschlagen, den Behandlungsbereich 16 beziehungsweise den Behandlungskopf der Mascarabürste 126 mit verschiedenen Borstentypen zu besetzen (nicht dargestellt). Damit wird erreicht, dass die verschiedenen Borstentypen stärker oder weniger stark auslenken. Die stärker auslenkenden Borsten sorgen zur Trennung zusammengeklebter Wimpern und die weniger stark auslenkenden Borsten zum Farbübertrag. Dies kann erreicht werden mittels unterschiedlichem Durchmesser, unterschiedlichen Längen, unterschiedlichen Querschnitten oder unterschiedlichen Materialien der verschiedenen Borstentypen. Bei den unterschiedlichen Materialien, kann in einer Ausgestaltungsvariante wie bei der Zahnbürste 12 eine Kombination aus konventionellen, zylindrischen Borsten aus Polyamid PA oder Polyester PBT mit gummielastischen Borsten aus Weichmaterial, vorzugsweise thermoplastischem Elastomer TPE die beste Wirkung erzielen. Desweiteren können nadelförmig zugespitzte Borsten im Borstenbesatz 18 verwendet werden.

In einer weiteren Ausführungsform des Mascara-Applikators 124 wird die Mascarabürste 126 nicht in Vibration versetzt, sondern statisch aufgeladen. Alternativ könnte im Bereich der Borsten der Mascarabürste 126 ein magnetisches und/oder elektrisches Feld erzeugt werden. Eine weitere Ausführungsform sieht vor, im Bereich des borstentagenden Pflegeelementes Wärme zu erzeugen. Dies kann mit einem Widerstandsdraht erreicht werden, vorzugsweise mit einem als Widerstandsdraht ausgelegter Eindrehdraht, mit dem die Borsten fixiert werden. Die Temperatur wird mit dem Steuerelement reguliert und erreicht eine maximale Temperatur von 80°C vorzugsweise aber ein Temperaturbereich von 30°C - 60°C. Die Wärmeeinleitung kann aber nicht nur direkt im Behandlungsbereich 16 erfolgen, es ist auch möglich, einen Wärmeeintrag auf den Macarabehälter 130 zu erzeugen. Damit kann beispielsweise erreicht werden, dass die Mascara-Farbe vor dem Auftragen erwärmt wird und so ihre Eigenschaften beziehungsweise ihren Aggregatszustand oder ihre Viskosität (hart oder zähflüssig im kalten Zustand, flüssig im warmen Zustand) ändert. Der Eintrag von Wärme kann auf diese Weise beispielsweise mittels eines Widerstandsdrahts in der Mascara-Farbe im Mascarabehälter 130, mittels flächigen Widerstandsblechen in der Mascara-Farbe im Mascarabehälter 130, mittels solchen Elementen an der Mascarabehälter-Wand oder mittels anderen wärmetransferierenden Elementen im Mascarabehälter 130 oder an dessen Wand erfolgen. Das Steuerelement ist in diesem Fall anstatt auf dem Applikator auf dem Mascarabehälter 130 aufgebracht, es kann die Wärmezufuhr zur Mascara-Farbe variiert werden.

Neben der Regulierung der Vibration mittels des Steuerelements können auch rotative und translative Bewegungen der Mascarabürste 126 gesteuert werden. Die Regulierung der rotativen Bewegung lässt eine Variation der Drehzahl und/oder der Drehrichtung der Mascarabürste 126 zu. Die Mascarabürste 126 dreht sind in diesem Fall um die Längsachse des Mascara-Applikators 124. Dabei sind natürlich auch reversierend rotative, d.h. schwenkende Bewegungen des Mascara-Applikators 124 möglich. Translative Bewegungen der Mascarabürste 126 erfolgen in Richtung der Längsachse des Mascara-Farbapplikators 124. Selbstverständlich handelt es sich auch hier um reversierend translative Bewegungen. Die Regulierung kann Möglichkeiten wie beispielsweise die Anpassung der Frequenz und/oder der Amplitude der Hin- und Her-Bewegung ermöglichen. Bei reversierenden Bewegungen des Mascara-Applikators 124 werden vorzugsweise Frequenzen von 50 Hz bis 300 Hz, vorzugsweise 150 Hz bis 250 Hz erzeugt. Es werden vorzugsweise relativ hohe Frequenzen mit kleinen Amplituden / Winkel bereitgestellt, um eine möglichst gute Farbverteilung zu erhalten.

Als weiteres Ausführungsbeispiel kann ein Lichtleiter, welcher durch eine Lichtquelle im Haltegriff gespiesen wird, in den Bereich des Pflegeelementes gebracht werden. Dies kann mittels eines transparenten Kunststoffstabes beziehungsweise Kunststoffdrahtes, welcher das Pflegelement respektive die Borsten trägt, erreicht werden. Der oben erwähnte Widerstandsdraht oder Lichtleiter kann auch während der Eindrehoperation zwischen dem Eindrehdraht festgeklemmt werden. Dies würde eine uniforme Lichtverteilung und Wärmeverteilung ermöglichen.

Mittels einem der oben aufgeführten Ausführungsbeispielen, gepaart mit einer entsprechenden Mascara (Wimperntusche), kann die Menge der Mascara, welche auf die Wimpern aufgetragen wird, gesteuert werden.

Selbstverständlich kann die Stärke der Felder, des Lichtes oder der Temperatur mittels eines Steuerelements wie oben beschrieben eingestellt werden.

Selbstverständlich ist die Anwendung eines elektrischen Steuerelements zur kontinuierlichen Veränderung des Energieflusses zwischen dem Energiespeicher und dem Verbraucher in Körperpflegegeräten nicht nur auf die oben beschriebenen Ausführungsbeispiele beschränkt. Beispielsweise können auch Lichtquellen, Wärmequellen, Magnetfelder und elektrische Felder gesteuert werden. Ebenfalls ist es denkbar die Lautstärke eines im Körperpflegegerät eingebauten Lautsprechers zu steuern. Desweiteren können durchwegs auch mehrere Funktionen realisiert werden, indem ein entsprechendes Potentiometer 42 (wie beschrieben) verwendet wird.

Weiter können Körperpflegegeräte, insbesondere Applikatoren für kosmetische Produkte, Applikatoren für dekorative Kosmetikstoffe und Körperlotionen, wie beispielsweise Lippenstifte, Nagellack und Puderbürsten generell mit einem elektrischen Verbraucher und einem zum Steuern dieses Verbrauchers bestimmten, von aussen einstellbaren, elektrischen Steuerelement ausgestattet sein. Vibrierende oder reversierende (schwenkend, hin und herbewegend) Applikatoren haben den Vorteil, dass das zu applizierende Medium besser auf einer Oberfläche verteilt wird und/oder besser in Poren der Oberfläche eindringt. Dadurch ist eine langanhaltende Fixierung des Mediums auf der Oberfläche gewährleistet. Für derartige Applikatoren gelten dieselben Auslegungsdaten wie für den Mascara-Applikator.

Insbesondere können die diversen Verbraucher 33 als Kombinationen oder einzeln auf den diversen, besprochenen Geräten eingesetzt werden. Natürlich ist es
abseits der Erfindung auch möglich die aufgeführten Geräte mit den möglichen Verbrauchern 33 ohne elektrisches Steuerelement einzusetzen. Das Steuerelement dient lediglich dazu die Verbraucher 33 auf die individuellen Anforderungen der einzelnen Benutzer zu justieren.

## Patentansprüche

1. Elektrisch betriebenes Körperpflegegerät mit einem Pflegeelement (16), einem einen Innenraum (24) aufweisenden Griffkörper (22), einem im Innenraum (24) angeordneten, elektrischen Energiespeicher (32) und einem elektrischen Verbraucher (33), der über eine ein Steuerelement (41, 42) aufweisende Steuereinrichtung zur kontinuierlichen Veränderung des Energieflusses zwischen dem Verbraucher (33) und dem Energiespeicher (32) am Energiespeicher (32) angeschlossen ist und das Steuerelement (41, 42) mittels eines Einstellelements (70, 72) von aussen einstellbar ist, wobei der maximale Spannungsabfall über dem Steuerelement (41, 42) derart begrenzt ist, dass die bestimmungsgemässe Funktion des Verbrauchers bei Energiefluss mit jeder Einstellung des Steuerelements (41, 42) gewährleistet ist und wobei das Steuerelement (41, 42) und das Einstellelement (70, 72) drehbar ausgebildet sind, **dadurch gekennzeichnet, dass** das Steuerelement (41, 42) und das Einstellelement (70, 72) in einer abnehmbaren Endkappe (26) angeordnet sind, mittels welcher der Innenraum (24) verschlossen ist, und die Endkappe (26) zwei voneinander getrennte, elektrische Kontaktelemente (36, 38), welche elektrisch mit dem Steuerelement (41, 42) verbunden sind, aufweist und bei verschlossenem Innenraum das eine der Kontaktelemente (38) mit einem Gegenkontakt am Griffkörper und das andere der Kontaktelemente (36) mit einem Kontakt des Energiespeichers (32) elektrisch verbunden ist.

2. Körperpflegegerät gemäss Anspruch 1, **dadurch gekennzeichnet, dass** das Steuerelement (41, 42) ein mechanisch verstellbarer, elektrischer Widerstand, insbesondere ein Potentiometer (42) ist, dessen Widerstandswert durch die Länge des vom Strom im Widerstand zurückgelegten Weges definiert ist.

3. Körperpflegegerät gemäss Anspruch 1 oder 2, **dadurch gekennzeichnet, dass** die Steuereinrichtung einen bezüglich dem Steuerelement (41, 42) in Serie geschalteten Ein- und Ausschalter (34, 34', 35) aufweist, der, optional, in das Bauteil des Einstellelements (41, 42) integriert ist.

4. Körperpflegegerät gemäss einem der Ansprüche 1 bis 3, **dadurch gekennzeichnet, dass** das Pflegeelement (16) durch den Verbraucher (33) in Vibration versetzbar ist und die Stärke der Vibration mittels des Steuerelements (41, 42) einstellbar ist.

5. Körperpflegegerät gemäss einem der Ansprüche 1 bis 4, **dadurch gekennzeichnet, dass** der Verbraucher (33) bei Energiezufuhr im Pflegeelement Licht, Schall, Wärme, ein elektrisches Feld und/oder ein magnetisches Feld erzeugt.

6. Körperpflegegerät gemäss einem der Ansprüche 1 bis 4, **dadurch gekennzeichnet, dass** das Steuerelement (41, 42) gleichzeitig mehrere Verbraucher steuert, welche unterschiedliche Leistungen aufnehmen können.

7. Körperpflegegerät gemäss einem der Ansprüche 1 bis 6, **dadurch gekennzeichnet, dass** das Steuerelement (41, 42) bei maximaler Leistung des Verbrauchers einen Widerstand kleiner oder gleich 10 Ω, vorzugsweise kleiner 1 Ω aufweist.

8. Körperpflegegerät gemäss einem der Ansprüche 1 bis 7, **dadurch gekennzeichnet, dass** das Steuerelement (41, 42) einen Widerstand von 1 Ohm bis 1 MΩ, vorzugsweise von 1 Ω bis 50 Ω aufweist.

9. Körperpflegegerät gemäss einem der Ansprüche 1 bis 8, **dadurch gekennzeichnet, dass** mittels des Steuerelements (41, 42) eine Stromstärke von 0.01A bis 4A, vorzugsweise von 0.05A bis 1A einstellbar ist.

10. Körperpflegegerät gemäss einem der Ansprüche 1 bis 9, **dadurch gekennzeichnet, dass** das Steuerelement (41, 42) ein Gewicht kleiner 10g, vorzugsweise kleiner 2g und ein Volumen, ohne abstehende Kontakte, kleiner als 10'000 mm3, vorzugsweise kleiner 500 mm3 aufweist.

11. Körperpflegegerät gemäss einem der Ansprüche 1 bis 10, **dadurch gekennzeichnet, dass** das Einstellelement (70, 72) in einem Winkelbereich von vorzugsweise 0° bis 350°, besonders bevorzugt von 0° bis 270°, insbesondere von 0° bis 150° drehbar ist.

12. Körperpflegegerät gemäss einem der Ansprüche 1 bis 11, **dadurch gekennzeichnet, dass** ein zum Betätigen des Einstellelements (70, 72) benötigtes Drehmoment kleiner ist als ein Drehmoment, welches zum Lösen der montierten Endkappe benötigt wird.

13. Körperpflegegerät gemäss einem der Ansprüche 1 bis 12, **dadurch gekennzeichnet, dass** das Steuerelement (41, 42) mittels einer Verdrehsicherung drehfest bezüglich der Endkappe (26) gehalten ist.

14. Körperpflegegerät gemäss einem der Ansprüche 1 bis 13, **dadurch gekennzeichnet, dass** das Pflegelement (16) mit unterschiedlichen Borstentypen besetzt ist, welche sich in der Länge, im Querschnitt und / oder in der Materialbeschaffenheit unterscheiden und dass durch die Einstellung des Steuerelements (41, 42) Zustände erreicht werden können, bei denen die unterschiedlichen Borstentypen unterschiedlich schwingen / auslenken.

15. Körperpflegegerät gemäss einem der Ansprüche 1 bis 14, **gekennzeichnet durch** die Ausbildung als Zahnbürste (12), wobei das Pflegeelement (16) mit einem Borstenbesatz (18) versehen und an einem über einen Halsbereich (20) mit dem Griffkörper (22) verbundenen Kopfbereich (14) der Zahnbürste (12) angeordnet, und der Verbraucher (33) im Halsbereich (20) oder Kopfbereich (14) angeordnet ist.

16. Körperpflegegerät gemäss einem der Ansprüche 1 bis 13, **gekennzeichnet durch** die Ausbildung als Rasierer (120), insbesondere als Nassrasierer, wobei das Pflegeelement (16) mit einer Rasierklinge versehen und an einem Kopfbereich (16) des Rasierers (120) und der Verbraucher (33) in oder benachbart zum Kopfbereich (16) angeordnet sind.

17. Körperpflegegerät gemäss einem der Ansprüche 1 bis 14, **gekennzeichnet durch** die Ausbildung als Mascara-Farbapplikator, wobei das Pflegeelement (16) mit einem Borstenbesatz (18) versehen ist und über einen Bürstenhalter (132) mit dem Griffkörper (22) verbunden ist, und der Verbraucher (33) im Griffkörper (22) angeordnet ist.

18. Körperpflegegerät gemäss einem der Ansprüche 1 bis 17, **dadurch gekennzeichnet, dass** das Einstellelement (72) eine vorzugsweise rotationssymmetrische äussere Form aufweist.

19. Körperpflegegerät gemäss einem der Ansprüche 1 bis 19, **dadurch gekennzeichnet, dass** die Oberfläche des Einstellelements (72) mit Furchen (86) oder anderen haptischen Elementen, wie Noppen, Schuppen, Ringen oder dergleichen, aus Hartkomponente, Weichkomponente oder einer Kombination davon versehen ist.

## Claims

1. Electrically operated personal care device with a care element (16), a grip body (22), having an interior space (24), an electrical energy store (32), arranged in the interior space (24), and an electrical load (33), which is connected to the energy store (32) via a control device, having a control element (41, 42), for continuously changing the energy flow between the load (33) and the energy store (32), and the control element (41, 42) can be set from the outside by means of a setting element (70, 72), wherein the maximum voltage drop across the control element (41, 42) is limited in such a way that the functioning of the load as intended is ensured when there is an energy flow with any setting of the control element (41, 42) and wherein the control element (41, 42) and the setting element (70, 72) are rotatably formed, **characterized in that** the control element (41, 42) and the setting element (70, 72) are arranged in a removable end cap (26), by means of which the interior space (24) is closed, and the end cap (26) has two electrical contact elements (36, 38), which are separate from each other and electrically connected to the control element (41, 42), and, when the interior space is closed, one of the contact elements (38) is electrically connected to a counter-contact on the grip body and the other of the contact elements (36) is electrically connected to a contact of the energy store (32).

2. Personal care device according to Claim 1, **characterized in that** the control element (41, 42) is a mechanically adjustable, electrical resistor, in particular a potentiometer (42), the resistance value of which is defined by the length of the path covered by the current in the resistor.

3. Personal care device according to Claim 1 or 2, **characterized in that** the control device has an on/off switch (34, 34', 35), which is connected in series with the control element (41, 42) and, optionally, is integrated in the component of the setting element (41, 42).

4. Personal care device according to one of Claims 1 to 3, **characterized in that** the care element (16) can be set in vibration by the load (33) and the intensity of the vibration can be set by means of the control element (41, 42).

5. Personal care device according to one of Claims 1 to 4, **characterized in that** the load (33) generates light, sound, heat, an electric field and/or a magnetic field in the care element when energy is supplied.

6. Personal care device according to one of Claims 1 to 4, **characterized in that** the control element (41, 42) simultaneously controls a number of loads which can accept different levels of power.

7. Personal care device according to one of Claims 1 to 6, **characterized in that** the control element (41, 42) has a resistance of less than or equal to 10 Q, preferably less than 1 Q, when the load is at maximum power.

8. Personal care device according to one of Claims 1 to 7, **characterized in that** the control element (41, 42) has a resistance of from 1 ohm to 1 MΩ, preferably from 1 Ω to 50 Ω.

9. Personal care device according to one of Claims 1 to 8, **characterized in that** a current intensity of from 0.01 A to 4 A, preferably from 0.05 A to 1 A, can be set by means of the control element (41, 42).

10. Personal care device according to one of Claims 1 to 9, **characterized in that** the control element (41, 42) has a weight of less than 10 g, preferably less than 2 g, and a volume, without projecting contacts, of less than 10,000 mm³, preferably less than 500 mm³.

11. Personal care device according to one of Claims 1 to 10, **characterized in that** the setting element (70, 72) can be rotated in an angle range of preferably 0° to 350°, with particular preference of 0° to 270°, in particular of 0° to 150°.

12. Personal care device according to one of Claims 1 to 11, **characterized in that** a torque required for actuating the setting element (70, 72) is less than a torque that is required for releasing the mounted end cap.

13. Personal care device according to one of Claims 1 to 12, **characterized in that** the control element (41, 42) is kept rotationally fixed with respect to the end cap by means of a anti-twist locking element.

14. Personal care device according to one of Claims 1 to 13, **characterized in that** the care element (16) is covered with different types of bristle, which differ in length, cross section and/or the nature of their material, and **in that** states in which the different types of bristle oscillate/deflect differently can be achieved by the setting of the control element (41, 42).

15. Personal care device according to one of Claims 1 to 14, **characterized by** being formed as a toothbrush (12), the care element (16) being provided with a covering of bristles (18) and arranged on a head region (14) of the toothbrush (12) that is connected to the grip body (22) via a neck region (20), and the load (32) being arranged in the neck region (20) or head region (14).

16. Personal care device according to one of Claims 1 to 13, **characterized by** being formed as a razor (120), in particular as a wet razor, the care element (16) being provided with a razor blade and arranged on a head region (16) of the razor (120), and the load (33) being arranged in or alongside the head region (16).

17. Personal care device according to one of Claims 1 to 14, **characterized by** being formed as a mascara applicator, the care element (16) being provided with a covering of bristles (18) and connected to the grip body (22) via a brush holder (132), and the load (33) being arranged in the grip body (22).

18. Personal care device according to one of Claims 1 to 17, **characterized in that** the setting element (72) has a preferably rotationally symmetrical outer form.

19. Personal care device according to one of Claims 1 to 19, **characterized in that** the surface of the setting element (72) is provided with furrows (86) or other haptic elements such as nubs, scales, rings or the like of a hard component, soft component or a combination thereof.

## Revendications

1. Appareil pour les soins du corps entraîné électriquement et présentant un élément de soin (16), un corps de poignée (22) présentant un espace intérieur (24), un accumulateur (32) d'énergie électrique disposé dans l'espace intérieur (24) et un consommateur électrique (33) qui est raccordé par l'intermédiaire d'un dispositif de commande présentant un élément de commande (41, 42) pour modifier de manière continue le flux d'énergie entre le consommateur (33) et l'accumulateur d'énergie (32) à l'accumulateur d'énergie (32), l'élément de commande (41, 42) pouvant être ajusté de l'extérieur au moyen d'un élément d'ajustement (70, 72),
la chute de tension maximale à travers l'élément de commande (41, 42) étant limitée de telle sorte que le fonctionnement correct du consommateur soit assuré par le flux d'énergie quel que soit le régulage de l'élément de commande (41, 42),
l'élément de commande (41, 42) et l'élément de réglage (70, 72) étant rotatifs,
**caractérisé en ce que**
l'élément de commande (41, 42) et l'élément d'ajustement (70, 72) sont disposés dans un bonnet d'extrémité amovible (26) au moyen duquel l'espace intérieur (24) est fermé,
**en ce que** le bonnet d'extrémité (26) présente deux éléments de contact électrique (36, 38) séparés l'un de l'autre et raccordés électriquement à l'élément de commande (41, 42) et
**en ce que**, l'espace intérieur étant fermé, l'un des éléments de contact (38) est raccordé électriquement à un contact complémentaire prévu sur le corps de poignée et l'autre élément de contact (36) est raccordé électriquement à un contact de l'accumulateur d'énergie (32) .

2. Appareil pour les soins du corps selon la revendication 1, **caractérisé en ce que** l'élément de commande (41, 42) est une résistance électrique ajustable mécaniquement, en particulier un potentiomètre (42) dont la valeur de la résistance est définie par la longueur du chemin parcouru par le courant dans la résistance.

3. Appareil pour les soins du corps selon les revendications 1 ou 2, **caractérisé en ce que** le dispositif de commande présente un commutateur (34, 34', 35) de branchement et de débranchement raccordé en série par rapport à l'élément de commande (41, 42) et facultativement intégré dans le composant de l'élément de réglage (41, 42).

4. Appareil pour les soins du corps selon l'une des revendications 1 à 3, **caractérisé en ce que** l'élément de soin (16) peut être mis en vibration par le consommateur (33) et **en ce que** l'intensité de la vibration peut être ajustée au moyen de l'élément de commande (41, 42).

5. Appareil pour les soins du corps selon l'une des revendications 1 à 4, **caractérisé en ce que** le consommateur (33) produit lorsque de l'énergie est apportée dans l'élément de soin de la lumière, du son, de la chaleur, un champ électrique et/ou un champ magnétique.

6. Appareil pour les soins du corps selon l'une des revendications 1 à 4, **caractérisé en ce que** l'élément de commande (41, 42) commande simultanément plusieurs consommateurs qui peuvent assurer différentes puissances.

7. Appareil pour les soins du corps selon l'une des revendications 1 à 6, **caractérisé en ce que** l'élément de commande (41, 42) présente une résistance inférieure ou égale à 10 Ω et de préférence inférieure à 1 Ω à la puissance maximale du consommateur.

8. Appareil pour les soins du corps selon l'une des revendications 1 à 7, **caractérisé en ce que** l'élément de commande (41, 42) présente une résistance de 1 Ohm à 1 MΩ et de préférence de 1 Ω à 50 Ω.

9. Appareil pour les soins du corps selon l'une des revendications 1 à 8, **caractérisé en ce que** l'intensité du courant qui peut être établie au moyen de l'élément de commande (41, 42) est comprise entre 0,01 A et 4 A et de préférence entre 0,05 A et 1 A.

10. Appareil pour les soins du corps selon l'une des revendications 1 à 9, **caractérisé en ce que** l'élément de commande (41, 42) présente un poids inférieur à 10 g et de préférence inférieur à 2 g et un volume, sans compter les contacts en débord, inférieur à 10 000 mm³ et de préférence inférieur à 500 mm³.

11. Appareil pour les soins du corps selon l'une des revendications 1 à 10, **caractérisé en ce que** l'élément de réglage (70, 72) peut être tourné dans une plage angulaire de préférence de 0° à 350°, de façon particulièrement préférable de 0° à 270° et notamment de 0° à 150°.

12. Appareil pour les soins du corps selon l'une des revendications 1 à 11, **caractérisé en ce qu'**un couple de rotation nécessaire pour actionner l'élément de réglage (70, 72) est inférieur au couple de rotation nécessaire pour libérer le bonnet d'extrémité qui a été monté.

13. Appareil pour les soins du corps selon l'une des revendications 1 à 12, **caractérisé en ce que** l'élément de commande (41, 42) est maintenu à rotation solidaire par rapport au bonnet d'extrémité (26) au moyen d'un blocage en rotation.

14. Appareil pour les soins du corps selon l'une des revendications 1 à 13, **caractérisé en ce que** l'élément de soin (16) est occupé par différents types de brosses qui se distinguent par leur longueur, leur section transversale et/ou la nature de leur matériau et **en ce que** par le réglage de l'élément de commande (41, 42), des situations dans lesquelles les différents types de brosses oscillent et/ou sont déviés différemment peuvent être obtenues.

15. Appareil pour les soins du corps selon l'une des revendications 1 à 14, **caractérisé par** la configuration comme brosse à dents (12), l'élément de soin (16) étant doté d'un jeu (18) de brosses et étant disposé sur une partie de tête (14) de la brosse à dents (12) reliée par l'intermédiaire d'une partie de col (20) au corps de poignée (22), le consommateur (33) étant disposé dans la partie de col (20) ou dans la partie de tête (14).

16. Appareil pour les soins du corps selon l'une des revendications 1 à 13, **caractérisé par** la configuration comme rasoir (120), en particulier comme rasoir à l'eau, l'élément de soin (16) étant doté d'une lame de rasage et étant disposé sur une partie de tête (16) du rasoir (120), le consommateur (33) étant disposé dans ou au voisinage de la partie de tête (16).

17. Appareil pour les soins du corps selon l'une des revendications 1 à 14, **caractérisé par** la configuration comme applicateur de mascara coloré, l'élément de soin (16) étant doté d'un jeu de brosses (18) et étant relié au corps de poignée (22) par l'intermédiaire d'un porte-brosse (32), le consommateur (33) étant disposé dans le corps de poignée (22).

18. Appareil pour les soins du corps selon l'une des revendications 1 à 17, **caractérisé en ce que** l'élément de réglage (72) présente une forme extérieure de préférence symétrique en rotation.

19. Appareil pour les soins du corps selon l'une des revendications 1 à 19, **caractérisé en ce que** la surface de l'élément de réglage (72) est dotée de sillons (86) ou d'autres éléments tactiles, par exemple des boutons, des écailles, des anneaux ou similaires, en composants durs, en composants mous ou en une combinaison de ces derniers.
